# EUROPÄISCHE PATENTSCHRIFT

(11) **EP 0 958 092 B1**
(45) Veröffentlichungstag und Bekanntmachung des Hinweises auf die Patenterteilung: **02.07.2003**
(21) Anmeldenummer: 97924962.0
(22) Anmeldetag: 20.05.1997
(51) Int. Cl.: B23K 11/30

(54) **FRÄSEINRICHTUNG UND VERFAHREN ZUM BEFRÄSEN DES SCHWEISSBEREICHS VON PUNKT-SCHWEISS-ELEKTRODEN**
MILLING ARRANGEMENT AND METHOD OF MILLING THE WELDING REGION OF SPOT-WELDING ELECTRODES
SYSTEME DE FRAISAGE ET PROCEDE POUR FRAISER LA ZONE DE SOUDAGE D'ELECTRODES DE SOUDAGE PAR POINTS

(30) Priorität: 21.05.1996 DE 29609102 U; 10.07.1996 DE 19627822
(43) Veröffentlichungstag der Anmeldung: 24.11.1999
(73) Patentinhaber: Lutz, Peter-Stephan, 900 21 Svaty Jur (SK)
(72) Erfinder: Lutz, Peter-Stephan, 900 21 Svaty Jur (SK)
(74) Vertreter: Ruttensperger, Bernhard, Dipl.-Phys.
(86) Internationale Anmeldenummer: EP9702572
(87) Internationale Veröffentlichungsnummer: WO97044153

(56) Entgegenhaltungen:
- EP-A- 0 171 113
- EP-A- 0 262 048
- EP-A- 0 581 308
- EP-A- 0 581 316
- FR-A- 2 589 767
- FR-A- 2 626 800
- FR-A- 2 632 228
- GB-A- 2 279 599
- US-A- 4 892 448
- PATENT ABSTRACTS OF JAPAN vol. 11, no. 372 (M-648), 4.Dezember 1987 & JP 62 144885 A (YOKOTA KOGYO K.K. ET AL.), 29.Juni 1987,
- PATENT ABSTRACTS OF JAPAN vol. 12, no. 21 (M-661) [2868] , 22.Januar 1988 & JP 62 179876 A (DENGENSHA MFG CO LTD), 7.August 1987,

## Beschreibung

Die vorliegende Erfindung betrifft eine Fräseinrichtung zum Befräsen des Schweißbereichs von durch einen Elektrodenhalter gehaltenen Punkt-Schweiß-Elektroden gemäß dem Oberbegriff des Anspruchs 1.

Das Punkt-Schweißen ist eine zum Verbinden von Metallblechen und Bändern häufig angewandte Verbindungsmethode, welche insbesondere in der Automobilindustrie zum Zusammenheften von Karosserieblechteilen Anwendung findet.

In einer Fertigungsstraße einer Karosseriefabrik sind entlang einer Durchlaufstrecke von Karosserieblechteilen, die während des Durchlaufs zu größeren Einheiten miteinander verbunden werden, eine Vielzahl von Schweißrobotern angeordnet, welche die Aufgabe haben, die Karosserieblechteile durch Punkt-Schweißen miteinander zu verbinden. Die Schweißroboter sind dabei häufig mit sogenannten Schweißzangen ausgebildet, deren Zangenbacken mit je einer Punkt-Schweiß-Elektrode ausgerüstet sind, so daß durch Annähern der Schweißbacken die Punkt-Schweiß-Elektrode zum Schweißeingriff mit bereits zur gegenseitigen Anlage gebrachten oder angenäherten Karosserieblechteilen gebracht werden können. Die Schweißroboter selbst umfassen Einstellmittel, welche beim Einrichten einer Schweißstraße die Lokalisierung der Schweißelektroden in Anpassung an die jeweiligen Schweißaufgaben ermöglichen und die außerdem die Bewegungen der Punkt-Schweiß-Elektroden ermöglichen, die notwendig sind, um den auf der Schweißstraße sich annähernden Karosserieblechteilen zunächst ausweichen zu können und anschließend Annäherungsbewegungen ausführen zu können, die das nachfolgende Erfassen der Karosserieblechteile durch Schweißelektroden gestatten.

In einer automatisierten Fertigungsstraße laufen die Schweißvorgänge an aufeinander folgenden Karosserieblechteilen möglichst unterbrechungsfrei ab. Die Möglichkeiten einer Kontrolle des Abnutzungszustands einer abgenutzten Punkt-Schweiß-Elektrode oder gar eines Austausches von Punkt-Schweiß-Eiektroden sind deshalb sehr beschränkt. Ein Austausch von Punkt-Schweiß-Elektroden ist in der Regel nur in zeitlichem Zusammenhang mit Schichtwechseln oder an Sonn- und Feiertagen möglich.

Andererseits ist nicht zu verhindern, daß Punkt-Schweiß-Elektroden, die im Verlauf einer Schicht Hunderte oder Tausende von Punkt-Schweiß-Vorgängen ausführen, im Laufe einer Schicht verschleißen: Im Schweißbetrieb treten die Wirkflächen oder Bodenflächen von Elektrodenkappen der Punkt-Schweiß-Elektroden in Eingriff mit den jeweils zu verschweißenden Karosserieblechteilen. Dabei fließt Strom zwischen den Elektroden durch die aneinander anliegenden Karossierieblechteile. Die Karosserieblechteile sind in der Regel Stahlbleche, ggf. verzinkt. Beim Stromübergang während der einzelnen Punkt-Schweißungen tritt eine Veränderung der Elektrodenkappen an deren Schweißbereichen auf. Eine häufig festgestellte Verschleißerscheinung besteht darin, daß sich am Rand der Wirkflächen von Schweißelektroden Abbrandwülste bilden, die eine Vergrößerung der jeweiligen Wirkfläche bedeuten. Eine solche Vergrößerung der Wirkfläche führt zu veränderten Schweißbedingungen, da sich die Größe des Stromübergangsquerschnitts am jeweiligen Schweißpunkt vergrößert. Der Stromübergangsquerschnitt ist aber genau vorberechnet und mit der Stromstärke beim jeweiligen Schweißvorgang abgestimmt. Vergrößert sich der Flächeninhalt des Stromübergangsquerschnitts nach einer Anzahl von Punkt-Schweiß-Vorgängen, so bedeutet dies, daß eine auf die ursprüngliche Größe des Stromübergangsquerschnitts abgestimmte Größe der Stromstärke nicht mehr optimal angepaßt ist und deshalb Punkt-Schweißungen minderer Qualität entstehen. Daneben kann sich beim Punkt-Schweißen von verzinkten Karosserieblechteilen an den Wirkflächen eine Zinkoxidschicht anlagern, welche den Stromübergangswiderstand erhöht. Auch dieses Phänomen führt zu Beeinträchtigungen der Schweißarbeit und damit der Schweißqualität. Man hat diesen Erscheinungen in der Vergangenheit dadurch Rechnung zu tragen versucht, daß man den im Laufe einer Schicht zunehmend sich anlagernden Abbrandwülsten und Zinkoxidschichten größere Stromstärken zugeordnet hat. Man spricht dann von einem Nachführen der Stromstärke, das im Fabrik-Slang auch "Steppen" genannt wird. Dieses Steppen ist aber keine optimale Lösung, da man mit Schwankungen rechnen muß, denen der nachgeführte Strom im Zweifelsfall nicht exakt genug angepaßt wird.

Man hat darüber hinaus auch schon Fräseinrichtungen an einer Fertigungsstraße installiert, um die sich, wie vorstehend beschrieben, "abnutzenden" Punkt-Schweiß-Elektroden in ihren Schweißbereichen zur Kompensation der Abnutzungserscheinungen nachzubearbeiten. Man hat bei Installation solcher Fräseinrichtungen von den auch für den Schweißbetrieb notwendigen Bewegungsmöglichkeiten des Schweißroboters gegenüber der Fertigungsstraße Gebrauch gemacht und mit Hilfe dieser Bewegungsmöglichkeiten die Schweißbereiche der Schweißelektroden bei Bedarf in Eingriff mit der jeweils installierten Fräseinrichtung gebracht.

Eine Fräseinrichtung zum Befräsen des Schweißbereichs von durch einen Elektrodenhalter gehaltenen Punkt-Schweiß-Elektroden umfaßt einen Werkzeugträger mit mindestens einem darin um eine Werkzeugdrehachse drehbar gelagerten Fräswerkzeug und Drehantriebsmittel für dieses Fräswerkzeug. Dabei ist das Fräswerkzeug mit mindestens einer zur Werkzeugdrehachse im wesentlichen konzentrischen, konkaven Aufnahmepfanne für die Aufnahme des Schweißbereichs der jeweiligen Punkt-Schweiß-Elektrode und mit jeweils einer Gruppe von Fräskanten im Bereich dieser Aufnahmepfanne zum Befräsen des jeweiligen Schweißbereichs ausgeführt; die Fräskanten der Gruppe von Fräskanten sind annähernd in die Werkzeugachse enthaltenden Ebenen angeordnet und über den Umfang der Aufnahmepfanne verteilt; die Relativ-Stellung des Schweißbereichs und der Aufnahmepfanne ist durch Einstellmittel mindestens einer der Baugruppen: Elektrodenhalter und Werkzeugträger variabel; es sind Andrückmittel vorgesehen sind, um für die Fräsvorgänge den Schweißbereich der jeweiligen Elektrode in Befräsungseingriff mit der Aufnahmepfanne und der zugehörigen Gruppe von Fräskanten zu halten. Wenn die Elektroden statisch angeordnet sind, so kann die Fräseinrichtung zu den Elekroden hinbewegt werden, die beispielsweise an den Backen einer Zange angeordnet sein können.

Die Fräseinrichtungen sind sowohl bezüglich ihrer Herstellung als auch insbesondere bezüglich ihrer Einstellung komplexe und diffizile Einrichtungen. Dies rührt u. a. daher, daß die Oberflächenformen der Schweißbereiche der zu bearbeitenden Elektroden mit hoher Genauigkeit an die jeweiligen Positionen der zu verschweißenden Werkstücke angepaßt werden müssen, wobei häufig asymmetrische Lagen der Wirkflächen und damit auch der Randzonen der Schweißbereiche der Elektroden benötigt werden, die bei der Befräsung exakt reproduziert werden müssen. Ferner müssen erhebliche Andrückkräfte (ca. 1500 - 4000 Newton) angewandt werden, um in kurzer Zeit die jeweils gewünschte Konfiguration der Wirkfläche und der Randzone zu erhalten. Wenn asymmetrische (nicht rotationssymmetrische) Konfigurationen reproduziert werden sollen, so besteht die Gefahr von Fehlzentrierungen zwischen den Schweißbereichen der Punkt-Schweiß-Elektroden und den zentrierenden Aufnahmepfannen mit der Folge, daß Fehlbearbeitungen ausgelöst werden.

Die EP 0 171 113 A1 offenbart eine Fräseinrichtung gemäß dem Oberbegriff des Anspruchs 1. Ein bei dieser bekannten Fräseinrichtung eingesetztes Fräswerkzeug ist an einem Träger zur Drehung um eine Drehachse drehbar getragen. An dem Träger sind in axialer Richtung beidseits des Fräswerkzeugs Plattenteile vorgesehen, die zur Zentrierung von zu bearbeitenden Elektrodenspitzen jeweilige Zentrieraussparungen aufweisen. Um beim Fräsvorgang entstehende Späne aus dem Bereich des Fräswerkzeugs und des Werkzeugträgers zu entfernen, ist ein Druckluftsystem vorgesehen. Druckluft wird durch eine entsprechende Kanalanordnung auch unmittelbar in das Fräswerkzeug eingespeist, um dort an demjenigen Bereich, in welchem die Späne auch erzeugt werden und sich somit verstärkt ansammeln werden, durch entsprechend starke Druckluftbeaufschlagung den Reinigungsvorgang vornehmen zu können. Dieser Vorgang findet dann statt, wenn der Vorgang der Bearbeitung von Elektrodenspitzen beendet ist und die bearbeiteten Elektroden weggezogen sind, so dass der Strömungsweg für die die Späne aus dem Bereich des Werkzeugs entfernende Druckluft freigegeben ist.

Beim Durchführen von Befräsungsvorgängen von Punkt-Schweiß-Elektroden entstehen Späne oder abgetragenes Material, welches sich dann im Bereich des Fräswerkzeugs ansammeln kann. Die derart angesammelten Späne können einerseits dazu führen, daß ein Fräsvorgang nicht mehr in geeigneter Weise durchgeführt werden kann und somit das Fräsergebnis nicht den erforderlichen Qualitätsanforderungen entspricht. Andererseits besteht die Gefahr, daß die Späne in Komponenten der Fräseinrichtung eindringen und diese dabei beschädigen.

Es ist die Aufgabe der vorliegenden Erfindung, eine gattungsgemäße Fräseinrichtung derart weiterzubilden, dass eine Beeinträchtigung durch beim Durchführen eines Fräsvorgangs entstehende Späne verhindert werden kann.

Erfindungsgemäß wird diese Aufgabe durch die im Anspruch 1 angegebene Fräseinrichtung gelöst.

Die erfindungsgemäße Fräseinrichtung umfasst einen Werkzeugträger mit wenigstens einem darin um eine Werkzeugdrehachse drehbar gelagerten Fräswerkzeug und Drehantriebsmitteln für dieses Fräswerkzeug, wobei vorzugsweise das Fräswerkzeug mit wenigstens einer zur Werkzeugdrehachse im wesentlichen konzentrischen, konkaven Aufnahmepfanne für die Aufnahme des Schweißbereichs der jeweiligen Punkt-Schweiß-Elektrode mit jeweils einer Gruppe von Fräskanten im Bereich dieser wenigstens einen Aufnahmepfanne zum Befräsen des jeweiligen Schweißbereichs ausgeführt ist, ferner umfassend Absaugmittel zum Absaugen von während des Befräsens erzeugten Spänen oder dergleichen.

Durch das Absaugen der Späne ist sichergestellt, daß diese in geeigneter Weise von der Fräseinrichtung entfernt werden und nicht zu einer Behinderung des Fräsvorgangs führen können. Auch kann damit ein Wegblasen der Späne vermieden werden, was ebenfalls dazu führen kann, daß die Späne sich an ungewünschten Orten ansammeln und dort zu einer Betriebsbeeinträchtigung führen.

Um eine Fräseinrichtung so auszugestalten, daß Fehlzentrierungen vermieden werden, die Schweißbereiche exakt reproduziert werden und lange Standzeiten der Punkt-Schweiß-Elektroden sowie der abnutzungsgefährdeten Teile der Fräseinrichtungen gewährleistet sind, wird vorgeschlagen, daß die Gruppe von Fräskanten mindestens und vorzugsweise vier Fräskanten umfaßt.

Wenn man davon ausgeht, daß die Fräskanten wenigstens annähernd gleichmäßig über den Umfang der Werkzeugdrehachse verteilt sind, so bedeutet die Anordnung von vier Fräskanten an einem Fräswerkzeug, daß der Abstand zwischen jeweils zwei unmittelbar in Umfangsrichtung aufeinander folgenden Fräskanten in der Größenordnung von 80° - 100°, vorzugsweise in der Nähe von 90° liegt. Man hat herausgefunden, daß bei Einhaltung dieser Winkelabstände herkömmliche Schweißelektroden, insbesondere solche mit teilsphärischen oder kegelstumpfförmigen Schweißbereichen relativ sicher zentriert werden können und somit die Gefahr eines Zentrierungsverlusts auch bei relativ großen Winkelabständen zwischen Elektrodenachse und Werkzeugdrehachse und bei hohen Andrückkräften vermieden werden kann.

Die Fräskanten einer Gruppe von Fräskanten können an bezüglich der Werkzeugdrehachse im wesentlichen radial verlaufenden Speichen eines radförmigen Fräsers des Fräswerkzeugs angeordnet sein. Speichenanordnung bedeutet dabei, daß zwischen aufeinander in Umfangsrichtung folgenden Speichen axiale Durchgänge geschaffen sind, durch die hindurch, unabhängig von der jeweiligen Orientierung des Fräswerkzeugs, Frässpäne abgeführt werden können, sei es durch Schwerkraft, sei es durch Blaswirkung.

Es wurde weiter oben schon angedeutet, daß beim Punkt-Schweißen häufig zwei zusammenwirkende Schweißelektroden zur Anwendung kommen, welche an den Backen einer sogenannten Schweißzange angeordnet sind. Dies wirft Probleme hinsichtlich der räumlichen Zuordnung der Fräseinrichtung zu den zusammenwirkenden Schweißelektroden und hinsichtlich der Zentrierung auf. Um mit diesen Problemen fertig zu werden, wird deshalb vorgeschlagen, daß das mindestens eine Fräswerkzeug mit zwei koaxialen und in Richtung der Werkzeugdrehachse voneinander abgekehrten Aufnahmepfannen für die Aufnahme der Schweißbereiche der beiden zusammenwirkenden Punkt-Schweiß-Elektroden ausgeführt ist.

Häufig werden zusammenwirkende Punkt-Schweiß-Elektroden einer schweißzange in gleichem oder ähnlichem Maße Verschleißerscheinungen unterliegen. In diesem Falle kann man jeder der Aufnahmepfannen eine Gruppe von Fräskanten zuordnen, so daß eine gemeinsame gleichzeitige Fräsbehandlung möglich wird.

Da auch die Fräswerkzeuge sich nach und nach abnutzen, ist vorgesehen, daß ein mit den Fräskanten ausgeführter Fräser des Fräswerkzeugs als Fräseinsatz zum lösbaren Einbau in einen Drehkopf des Fräswerkzeugs ausgebildet ist, wobei dieser Drehkopf in dem Fräswerkzeugträger drehbar gelagert ist.

Wie schon angedeutet, besteht häufig die Möglichkeit, daß der Fräswerkzeugträger in einer Punkt-Schweiß-Anlage mindestens einer Punkt-Schweiß-Elektrode oder mindestens einem Punkt-Schweiß-Elektrodenpaar derart zugeordnet ist, daß die jeweils zu befräsende Punkt-Schweiß-Elektrode durch Einstellung von elektrodenhalterseitigen Einstellmitteln von einem Arbeitszustand in eine Befräsungsstellung gegenüber dem jeweiligen Fräswerkzeug einstellbar ist.

Die Punkt-Schweiß-Elektrode kann mit einem stabförmigen Elektrodenschaft und mit einem an einem Ende des Elektrodenschafts angeordneten Schweißbereich ausgeführt sein. Dabei haben sich in der Praxis Ausführungsformen durchgesetzt, wo an dem stabförmigen Elektrodenschaft Elektrodenkappen, beispielsweise aus Kupfer oder Kupferlegierung, angebracht sind, die den eigentlichen Schweißbereich bilden.

Die Schweißbereiche sind in der Praxis häufig mit annähernd sphärischen oder annähernd kegelstumpfförmigen Oberflächen ausgeführt, und zwar in der Regel mit einer Wirkfläche und einer die Wirkfläche wenigstens teilweise umgebenden Randzone. Die Wirkfläche ist dabei diejenige Fläche, die bei der Schweißoperation in Anlage mit dem jeweiligen Werkstück kommt und demgemäß entweder plan oder mit leichter, zum jeweiligen Werkstück hin konvexer Krümmung ausgeführt ist. Die Wirkfläche hat beispielsweise einen Durchmesser von ca. 3 - 10 mm.

Die Fräskanten können an einem einstückig geformten Speichenkörper angeordnet sein; dieser Speichenkörper kann beispielsweise ein Hartmetallkörper sein, der nach pulvermetallurgischen Verfahren durch Sinterung hergestellt ist. Das Sinterteil kann dabei an seiner Oberfläche durch Elektroerosion oder durch spanabhebende Bearbeitung, etwa mittels Diamantwerkzeugen, nachbearbeitet sein. Ein einstückig geformter Speichenkörper kann mit seinen radial äußeren Enden in einen Ringkörper des jeweiligen Werkzeugs eingebaut, vorzugsweise eingelötet, sein.

Nach einer bevorzugten Ausführungsform der Erfindung ist die Zahl der Fräskanten einer Gruppe von Fräskanten eine gerade Zahl. Dann ist es möglich, bei gleichmäßiger Beabstandung der Fräskanten in Umfangsrichtung jeweils zwei Fräskanten einer Gruppe von Fräskanten annähernd in einer gemeinsamen, die Werkzeugdrehachse enthaltenden Ebene anzuordnen. Dies erweist sich insbesondere aus Zentrierungsgründen als besonders vorteilhaft.

Die Fräskanten können unmittelbar die Aufnahmepfanne bilden, ohne daß es sonstiger Zentrierungsflächen in der Aufnahmepfanne bedarf. Dies ist insbesondere in der Weise möglich, daß die in einer gemeinsamen, die Werkzeugdrehachse enthaltenden Ebene angeordneten Fräskanten bei einer Betrachtungsrichtung orthogonal zu dieser gemeinsamen Ebene eine der Aufnahmepfanne entsprechende oder, besser gesagt, eine zur Bildung der Aufnahmepfanne beitragende konkave Kontur besitzen.

Wenn ein Fräswerkzeug sowohl die Wirkfläche als auch die Randzone bearbeiten soll, so wird vorgeschlagen, daß die Fräskanten mindestens eines Paars von annähernd in einer gemeinsamen, die Werkzeugdrehachse enthaltenden Ebene liegenden Fräskanten radial einwärts bis auf Null-Abstand an die Werkzeugdrehachse heranreichen. Dabei kann man das Heranreichen einer Fräskante bis auf Null- oder nahezu Null-Abstand an die Werkzeugdrehachse ermöglichen, indem man eine in Drehrichtung vorauslaufende Speiche zentrumsseitig abschrägt.

Geht es darum, lediglich die Randzone zu befräsen, so kann man das Fräswerkzeug auch so gestalten, daß die Fräskanten mindestens eines Paars von in einer gemeinsamen, die Werkzeugdrehachse enthaltenden Ebene liegenden Fräskanten nach radial einwärts in eine von Fräskanten im wesentlichen freie Zentralfläche einlaufen.

Der Grund dafür, unterschiedlich gestaltete Fräswerkzeuge bereit zu halten, zum einen solche, bei denen die Fräskanten bis in die Drehachse hereinlaufen, und zum anderen solche, bei denen die Fräskanten nicht bis in die Werkzeugdrehachse hereinreichen, sondern in eine freie Zentralfläche einlaufen, ist folgender:

Das Befräsen der Randzone ist in relativ kurzen Zeitabständen während einer Schicht notwendig (jeweils nach 20 - 30 Schweißpunkten, vorzugsweise nach 70 - 80 Schweißpunkten, gelegentlich auch nach 200 - 300.oder auch 500 und mehr Schweißpunkten), weil sich am Rande der Wirkfläche im Übergangsbereich zur Randzone Abbrand relativ rasch anlagert, der zu einer Vergrößerung der Wirkfläche führt. Andererseits ergeben sich auch auf der Wirkfläche Anlagerungen, z. B. Zinkoxid-Anlagerungen, letztere insbesondere dann, wenn die Schweißelektroden zum Punkt-Schweißen von verzinkten Blechen benutzt werden. Die Praxis hat gezeigt, daß die Abbrandanlagerungen in der Randzone relativ häufiger abgetragen werden müssen als die Anlagerungsschichten auf der Wirkfläche. Aus Gründen der möglichst langen Standzeit einer Elektrode ist man bestrebt, Abfräsungen immer nur dann vorzunehmen, wenn dies unbedingt notwendig ist. Würde man z. B. die Anlagerungen von Zinkoxid auf der Wirkfläche häufiger abtragen als notwendig, so würde sich die Standzeit der Elektrode verringern. Aus diesem Grunde wird vorgeschlagen, daß die Abbrandanlagerungen relativ häufig abgetragen werden, ohne daß gleichzeitig die Oxidanlagerungen an der Wirkfläche abgetragen werden. Zur isolierten Abfräsung der Abbrandanlagerungen an der Randzone benutzt man Fräswerkzeuge, bei denen die Fräskanten radial außerhalb der Werkzeugdrehachse in die freie Zentralfläche einlaufen. Andererseits benutzt man dann, wenn gleichzeitig mit den Abbrandanlagerungen auch Oxidschichten auf der Wirkfläche abgetragen werden sollen, solche Fräswerkzeuge, deren Fräskanten bis in die Werkzeugdrehachse hineinreichen oder in ganz kurzem Abstand von beispielsweise 1 mm vor der Werkzeugdrehachse enden.

Während einer Schicht kann man dann beispielsweise so vorgehen: Zur Anpassung der jeweiligen Punkt-Schweiß-Elektrode an die jeweilige Schweißaufgabe wird der Schweißbereich der Punkt-Schweiß-Elektrode mit einem Werkzeug bearbeitet, dessen Fräskanten bis in die Drehachse hineinreichen oder in ganz kurzem Abstand davor enden.

Im Laufe der Schicht werden dann in kürzeren Abständen, z. B. nach etwa 300 Schweißpunkten, lediglich die Randzonen abgefräst, wozu Fräswerkzeuge mit außerhalb der Werkzeugdrehachse endenden Fräskanten benutzt werden.

In Abständen von ca. 1200 Punkt-Schweißungen wird gleichzeitig mit der Befräsung der Randzone auch die Wirkfläche gefräst, und in diesem Zeitpunkt werden deshalb Fräswerkzeuge eingesetzt, deren Fräskanten bis an die Werkzeugdrehachse heranreichen.

Für die verschiedenen Typen von Fräswerkzeugen kann gelten, daß die Fräskanten an den Speichen durch die Werkzeugdrehachse enthaltende Speichenflächen und durch entgegen der Fräsdrehrichtung abfallende Dachflächen der Speichen gebildet sind.

Ein weiterer Aspekt der Erfindung ist, daß an ein und demselben Werkzeugträger mindestens zwei Fräswerkzeuge angeordnet sind, welche zur Erfüllung unterschiedlicher Befräsungsaufgaben an dem Schweißbereich ein und derselben Punkt-Schweiß-Elektrode ausgebildet sind. Dieser Aspekt ist nicht notwendig an die Kantenzahl gemäß Anspruch 1 gebunden.

Die Ausführungsform mit mindestens zwei Fräswerkzeugen an einer Fräseinrichtung erlaubt es wahlweise, verschiedene Befräsungsmaßnahmen an ein und derselben Punkt-Schweiß-Elektrode vorzunehmen, also beispielsweise in kürzeren Abständen eine Befräsung jeweils nur der Randzone und in längeren Abständen eine Befräsung sowohl der Randzone als auch der Wirkfläche.

Es ist zu beachten, daß in modernen Fertigungsanlagen die Bewegung der Punkt-Schweiß-Elektroden motorgetrieben und computergesteuert ist. Dementsprechend ist es auch möglich, den motorischen Bewegungsantrieb und die Computer-Steuerung zu benutzen, um die Punkt-Schweiß-Elektroden dann, wenn eine Befräsung notwendig ist, mit ihren Schweißbereichen an die jeweiligen Fräswerkzeuge heranzuführen. Es ist dann nur eine Frage der Steuerung, ob bei mit mehr als einem Fräswerkzeug ausgerüsteten Fräseinrichtungen die Schweißelektrode an das eine oder das andere Fräswerkzeug herangeführt wird.

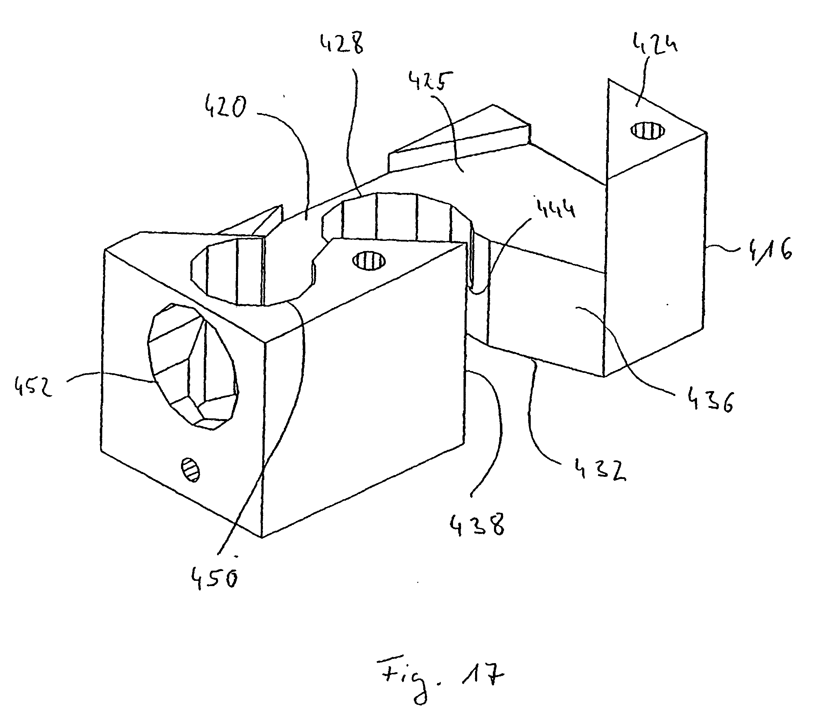

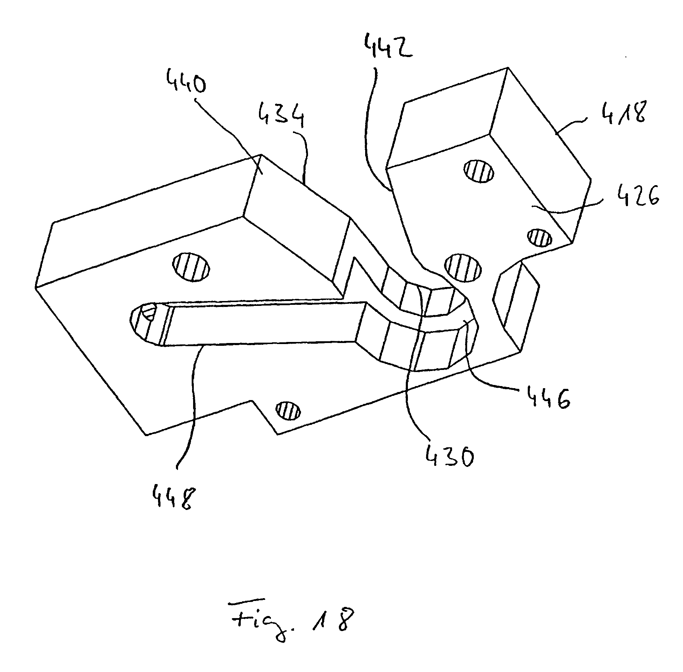

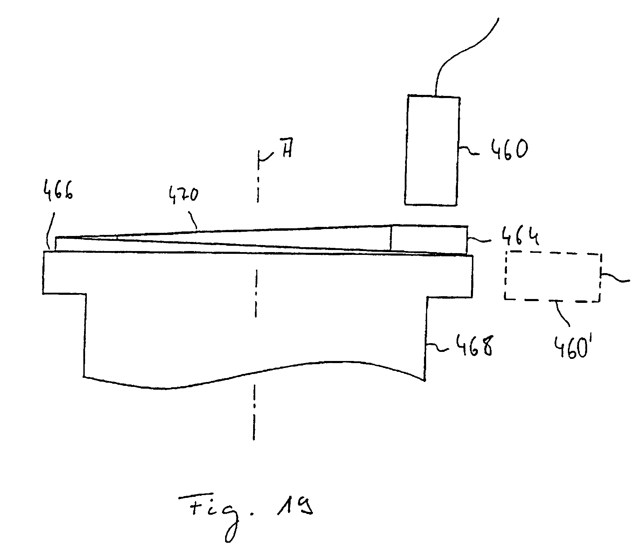

Bekannte Punkt-Schweiß-Elektroden weisen im allgemeinen einen sphärischen Spitzenbereich auf, der am Ende zum Bilden der Wirkfläche abgeflacht ist. Die Wirkfläche ist diejenige Fläche, über die beim Schweißvorgang der Strom in die zu verschweißenden Teile eingeleitet wird. Um konstante Schweißbedingungen vorsehen zu können, muß daher auch nach dem Befräsen derartiger Punkt-Schweiß-Elektroden die Wirkfläche näherungsweise in ihrer Größe gleich bleiben. Da jedoch bei zunehmendem Befräsen Material vom Ende der Punkt-Schweiß-Elektrode abgetragen wird und sich die Wirkfläche somit immer weiter nach einwärts verlagert, bildet sich eine die Wirkfläche umgebende Randzone, in welcher ebenfalls Material vom Endbereich der Schweißelektrode abgetragen wird. Dies ist in den Figuren 11 bis 13 dargestellt, wobei die Figur 11 eine neue, noch nicht benutzte Punkt-Schweiß-Elektrode 14 zeigt. Die Punkt-Schweiß-Elektrode 14 weist eine Wirkfläche 26 mit einem Durchmesser d auf, wobei die Wirkfläche 26 durch Abflachen eines im wesentlichen sphärischen Endbereichs 11 der Punkt-Schweiß-Elektrode 14 gebildet ist. Wird eine derartige Punkt-Schweiß-Elektrode 14 befräst, so entsteht eine in Fig. 12 gezeigte Punkt-Schweiß-Elektrode 14, in welcher eine Randzone 22 gebildet wird, welche die Wirkfläche 26 näherungsweise in der Form eines Kegelstumpfs umgibt und in dem in Fig. 12 gezeigten Zustand eine Breite r aufweist. Wird diese Punkt-Schweiß-Elektrode 14 weiter befräst, so vergrößert sich bei gleichbleibendem Wirkflächendurchmesser d die Breite r der Randzone 22, da von dem sphärischen Endbereich 11 weiter Material abgetragen wird (Fig. 13).

Dieses Verbreitern der Randzone führt zu dem folgenden Problem. Die Punkt-Schweiß-Elektrode bzw. -Elektroden werden zum Befräsen mit einer vorbestimmten Kraft gegen ein Fräswerkzeug gepreßt. Diese vorbestimmte Kraft verteilt sich dann über die Länge der Fräskanten und führt zu einer vorbestimmten Flächen- bzw. Linienpressung. Wird nun der Flächenbereich der Randzone zunehmend größer, so verteilt sich die vorbestimmte Kraft auf einen zunehmend größeren Flächenbereich der Punkt-Schweiß-Elektrode und führt somit zu einer Abnahme der Flächenpressung. Dies hat jedoch zur Folge, daß die Fräsbedingungen geändert werden und somit über die Lebensdauer einer Elektrode hinweg das Befräsen ungleichmäßig durchgeführt wird. Insbesondere wird pro Fräsvorgang aufgrund der Verringerung der Flächenpressung weniger Material von der Punkt-Schweiß-Elektrode abgetragen.

Um diesem Problem entgegenzuwirken, wird gemäß einem weiteren Aspekt der vorliegenden Erfindung ein Fräswerkzeug vorgeschlagen, insbesondere für eine Fräseinrichtung zum Befräsen des Schweißbereichs von durch einen Elektrodenhalter gehaltenen Punkt-Schweiß-Elektroden, wobei die Fräseinrichtung einen Werkzeugträger für wenigstens ein darin um eine Werkzeugdrehachse drehbar lagerbares Fräswerkzeug sowie Drehantriebsmittel für dieses Fräswerkzeug umfaßt, wobei das Fräswerkzeug wenigstens eine in einer die Werkzeugdrehachse enthaltenen Ebene liegende und bezüglich der Werkzeugdrehachse radial verlaufende Fräskante zum Befräsen eines jeweiligen Schweißbereichs aufweist, wobei die Fräskante durch eine in einer Werkzeugdrehrichtung vorne liegende Vorderkante einer der wenigstens einen Fräskante zugeordneten Elektrodenanlagefläche des Fräswerkzeugs gebildet ist, wobei eine Breite der Elektrodenanlagefläche orthogonal zur Fräskante von radial innen nach radial außen, vorzugsweise konstant, abnimmt.

Mit einem derart aufgebauten Fräswerkzeug läßt sich erreichen, daß bei einer zunehmenden Verbreiterung der Randzone eine entsprechende Zunahme der Elektrodenanlagefläche kleiner wird, so daß beispielsweise bei einer Verdopplung der Breite der Randzone nicht auch eine Verdopplung der Größe der Fläche auftritt, mit welcher die Punkt-Schweiß-Elektrode am Fräswerkzeug anliegt. Es läßt sich somit verhindern, daß in Proportion zur Zunahme der Breite der Randzone auch die Flächenpressung abnimmt, so daß über die Lebensdauer einer Punkt-Schweiß-Elektrode hinweg die Befräsbedingungen nur in relativ geringem Ausmaß verändert werden.

Um eine geeignete Anlage der Punkt-Schweiß-Elektroden an der Elektrodenanlagefläche vorsehen zu können, wird vorgeschlagen, daß die der wenigstens einen Fräskante zugeordnete Elektrodenanlagefläche bezüglich der die Werkzeugdrehachse enthaltenen Ebene, in welcher die wenigstens eine Fräskante liegt, unter einem Winkel von näherungsweise 90° angeordnet ist.

Wenn es erforderlich ist, lediglich die Randzone zu befräsen und die Wirkfläche bei einem Fräsvorgang unverändert zu belassen, dann ist es vorteilhaft, wenn die wenigstens eine Fräskante einen radial äußeren Fräskantenabschnitt mit einer zugeordneten radial äußeren Elektrodenanlagefläche umfaßt, wobei ein radial innerer Endbereich des radial äußeren Fräskantenabschnitts und der zugeordneten radial äußeren Elektrodenanlagefläche einen radialen Abstand zur Werkzeugdrehachse aufweist, wobei der radial äußere Fräskantenabschnitt bezüglich der Werkzeugdrehachse geneigt ist zum Vorsehen einer im wesentlichen kegelstumpfartigen oder sphärischen Randzone einer Schweißelektrode.

Um zusätzlich die Wirkfläche befräsen zu können, kann vorgesehen sein, daß die wenigstens eine Fräskante ferner einen an den radial äußeren Fräskantenabschnitt angrenzenden radial inneren Fräskantenabschnitt mit einer zugeordneten radial inneren Elektrodenanlagefläche umfaßt. Zum Bilden einer geeignet geformten Wirkfläche ist es vorteilhaft, wenn der radial innere Fräskantenabschnitt zur Werkzeugdrehachse näherungsweise orthogonal verläuft und gewünschtenfalls geringfügig konkav gekrümmt ist zum Vorsehen einer geringfügig konvex gekrümmten Wirkfläche einer Punkt-Schweiß-Elektrode.

Es hat sich gezeigt, daß mit dem erfindungsgemäßen Fräswerkzeug besonders hochwertige Fräsflächen erzeugt werden können, wenn nur die dem radial äußeren Fräskantenabschnitt zugeordnete radial äußere Elektrodenanlagefläche in ihrer Breite nach radial außen abnimmt und die dem radial inneren Fräskantenabschnitt zugeordnete radial innere Elektrodenanlagefläche in radialer Richtung eine im wesentlichen konstante Breite aufweist.

Dabei ist es vorteilhaft, wenn die Breite der radial inneren Elektrodenanlagefläche kleiner ist als eine Breite der radial äußeren Elektrodenanlagefläche in ihrem radial inneren Endbereich.

Wenn das Fräswerkzeug eine Mehrzahl von Fräskanten aufweist, dann ist es einerseits möglich, durch diese Fräskanten die Punkt-Schweiß-Elektrode im Werkzeug beim Fräsvorgang zu zentrieren. Andererseits kann mit einem derart ausgebildeten Fräswerkzeug pro Umdrehung des Fräswerkzeugs ein größerer Materialbetrag abgefräst werden, so daß der Fräsvorgang schneller durchgeführt werden kann.

Vorteilhafterweise weisen dabei in Umfangsrichtung unmittelbar aufeinander folgende Fräskanten einen Winkelabstand im Bereich von 80° - 100°, vorzugsweise von 90°, zueinander auf.

Es kann beispielsweise vorgesehen sein, daß das Fräswerkzeug eine gerade Anzahl an Fräskanten, vorzugsweise vier Fräskanten, aufweist, welche jeweils in die Werkzeugdrehachse enthaltenden Ebenen liegen.

Mit dem erfindungsgemäßen Fräswerkzeug lassen sich weiter besonders hochwertige Fräsflächen erzeugen, wenn jeweils im wesentlichen diametral gegenüberliegende Fräskanten ein Fräskantenpaar bilden und die Fräskanten eines ersten Fräskantenpaares von in Umfangsrichtung nebeneinanderliegenden ersten und zweiten Fräskantenpaaren den radial inneren und den radial äußeren Fräskantenabschnitt mit den zugeordneten radial inneren und radial äußeren Elektrodenanlageflächen aufweisen und die Fräskanten des zweiten Fräskantenpaars jeweils nur den radial äußeren Fräskantenabschnitt mit den jeweils zugeordneten radial äußeren Elektrodenanlageflächen aufweisen.

Die Fräseinrichtung kann ein Fräswerkzeug enthalten, bei dem die Breite der Elektrodenanlagefläche orthogonal zur Fräskante von radial innen nach radial außen abnimmt.

Dabei kann vorgesehen sein, daß die Fräseinrichtung in einer Punkt-Schweiß-Anlage mindestens einer Punkt-Schweiß-Elektrode oder mindestens einem Punkt-Schweiß-Elektrodenpaar derart zugeordnet ist, daß die jeweils zu befräsende Punkt-Schweiß-Elektrode bzw. -Elektroden durch Einstellung von elektrodenhalterseitigen Einstellmitteln von einem Arbeitszustand in eine Befräsungsstellung gegenüber dem jeweiligen Fräswerkzeug einstellbar ist bzw. sind, wobei die elektrodenhalterseitigen Einstellmittel zum Vorsehen einer veränderbaren Anlagekraft der Punkt-Schweiß-Elektrode bzw. -Elektroden an der wenigstens einen Fräskante und der zugeordneten Elektrodenanlagefläche ausgebildet sind. Eine derartige Ausgestaltung der Fräseinrichtung unterstützt das Erreichen des Ziels, über eine Elektrodenlebensdauer hinweg eine nahezu gleichbleibende Flächenpressung beim Fräsvorgang zu erhalten.

Vorteilhafterweise ist dabei vorgesehen, daß die elektrodenhalterseitigen Einstellmittel zum Erhöhen der Anlagekraft entsprechend einer in der Elektrodenlebensdauer zunehmenden Abfräsung der Punkt-Schweiß-Elektrode bzw. -Elektroden ausgebildet sind.

Dies kann beispielsweise dadurch erhalten werden, daß die elektrodenhalterseitigen Einstellmittel die Anlagekraft entsprechend der Anzahl an durchgeführten Fräsvorgängen erhöhen.

Vorteilhafterweise kann vorgesehen sein, daß die Absaugmittel ein wenigstens an einer von in Richtung der Werkzeugdrehachse entgegengesetzten Seiten des Werkzeugträgers anordenbares Plattenteil umfassen mit einer mit der wenigstens einen Aufnahmepfanne in Richtung der Werkzeugdrehachse in Ausrichtung bringbaren Elektrodeneinführöffnung, einem ersten Absaugkanalabschnitt, welcher die Elektrodeneinführöffnung wenigstens bereichsweise umgibt, und einem zweiten Absaugkanalabschnitt, welcher den ersten Absaugkanalabschnitt mit einem Unterdruckerzeugungsmittel-Anscblußbereich des wenigstens einen Plattenteils verbindet. Durch den ersten und den zweiten Absaugkanalabschnitt können dann die Späne aus dem Bereich des Fräswerkzeugs abgesaugt werden.

Das wenigstens eine Plattenteil ist beispielsweise durch Fräsen oder dergleichen besonders einfach herzustellen, wenn der erste und/oder der zweite Absaugkanalabschnitt in dem wenigstens einen Plattenteil zu einer in Anlage an dem Werkzeugträger bringbaren Oberfläche des wenigstens einen Plattenteils offen sind.

Das mit dem Werkzeugträger verbindbare wenigstens eine Plattenteil kann in vorteilhafter Weise ferner dazu benutzt werden, den Vorgang des Heranführens der Punkt-Schweiß-Elektroden an das Fräswerkzeug zu unterstützen, wenn in dem wenigstens einen Plattenteil ein sich von der Elektrodeneinführöffnung im wesentlichen quer zur Werkzeugdrehachse wegerstreckender Elektrodeneinführkanal vorgesehen ist.

Dabei verbindet der Elektrodeneinführkanal vorteilhafterweise die Elektrodeneinführöffnung mit einer Seitenrandfläche des wenigstens einen Plattenteils und erstreckt sich vorzugsweise in Richtung der Werkzeugdrehachse durch das gesamte Plattenteil hindurch.

Um das Heranführen der Punkt-Schweiß-Elektroden an das Fräswerkzeug zuverlässig durchführen zu können, wird vorgeschlagen, daß der Elektrodeneinführkanal durch vorzugsweise trichterförmig auf die Elektrodeneinführöffnung zu verlaufende Elektrodenleitflächen im wenigstens einen Plattenteil gebildet ist.

Insbesondere wenn mit der erfindungsgemäßen Fräseinrichtung Punkt-Schweiß-Elektrodenpaare befräst werden sollen, d. h. es wird an den Werkzeugträger von beiden in Richtung der Werkzeugdrehachse entgegengesetzten Seiten her eine Elektrode herangeführt, dann ist es vorteilhaft, wenn zwei Plattenteile vorgesehen sind, wobei jeweils ein Plattenteil an jeder von in Richtung der Werkzeugdrehachse entgegengesetzten Seiten des Werkzeugträgers anordenbar ist.

Um die Plattenteile in geeigneter Weise mit dem Werkzeugträger verbinden zu können und somit eine geeignete Absaugwirkung erhalten zu können, wird vorgeschlagen, daß in wenigstens einem der Plattenteile an seiner zur Anlage am Werkzeugträger bringbaren Seite eine Werkzeugträger-Aufnahmevertiefung vorgesehen ist, derart, daß beim Verbinden des Werkzeugträgers mit den Plattenteilen im Bereich der einander zugewandten Seiten der Plattenteile eine Ausnehmung gebildet ist, in welcher der Werkzeugträger im wesentlichen vollständig aufgenommen ist.

Die Absaugwirkung kann weiter verbessert werden, wenn die Plattenteile in einem die Aufnahmeausnehmung umgebenden Randbereich, vorzugsweise unter Zwischenlagerung von Dichtungsmitteln, wenigstens bereichsweise zur Anlage aneinander bringbar sind.

Um die jeweils an beiden Seiten des Werkzeugträgers liegenden Absaugkanalabschnitte der beiden Plattenteile gemeinsam mit einem einzigen Unterdruckerzeugungsmittel verbinden zu können, wird vorgeschlagen, daß die zweiten Absaugkanalabschnitte der beiden Plattenteile in ihren von den jeweiligen ersten Absaugkanalabschnitten entfernten Endbereichen durch einen in wenigstens einem der Plattenteile ausgebildeten Verbindungskanalabschnitt miteinander verbunden sind, und daß der Verbindungskanalabschnitt die zweiten Absaugkanalabschnitte in jedem Plattenteil mit dem Unterdruckerzeugungsmittel-Anschlußbereich verbindet.

Die Fräseinrichtung umfaßt vorteilhafterweise ferner Unterdruckerzeugungsmittel, welche vorzugsweise eine Vakuumpumpe umfassen.

Das Entfernen von Spänen durch Absaugen über die Absaugkanalabschnitte kann weiter unterstützt werden, wenn ferner Turbulenzerzeugungsmittel vorgesehen sind zum Erzeugen einer Luftturbulenz im ersten oder/und zweiten Absaugkanalabschnitt, um die Bewegung von beim Befräsen erzeugten Spänen oder dergleichen in den ersten und den zweiten Absaugkanalabschnitt zu unterstützen.

Um beim Befräsen von Elektrodenspitzen eine definierte Abfräsung erzeugen zu können, ist es wichtig, die Anzahl an Umdrehungen des Fräswerkzeugs, welche dieses bei jedem Fräsvorgang durchführt, genau steuern zu können. Dazu ist es jedoch erforderlich, Information über die Drehung des Fräswerkzeugs zu erhalten. Dies ist beispielsweise bei bekannten durch Turbinen angetriebenen Fräswerkzeugen derart durchgeführt worden, daß das Turbinenantriebsmedium, d. h. die Luft, welches die Turbine durchströmt hat, hinsichtlich seiner Menge erfaßt wurde und dann aus den herrschenden Druckverhältnissen vor und nach der Turbine ein Rückschluß darauf gezogen wird, wie viele Umdrehungen die Turbine und somit das beispielsweise über ein Untersetzungsgetriebe mit der Turbine gekoppelte Fräswerkzeug gemacht haben. Dies ist jedoch eine relativ ungenaue und schwer durchzuführende Bestimmung der Anzahl an Umdrehungen des Fräswerkzeugs, was zu entsprechend ungleichmäßigen Fräsvorgängen führt.

Die Fräseinrichtung kann ferner Umdrehungserfassungsmittel zum Erfassen einer Drehung des Fräswerkzeugs umfassen.

Die Umdrehungserfassungsmittel sind erfindungsgemäß zum direkten Erfassen der Drehung des Fräswerkzeugs bezüglich des Werkzeugträgers ausgebildet. Durch das direkte Erfassen der Drehung des Werkzeugs, ohne dem Erfordernis, die Drehung anderer Fräseinrichtungskomponenten erfassen zu müssen, ist eine sehr genaue Bestimmung der Anzahl der durch das Fräswerkzeug durchgeführten Umdrehungen erhaltbar. Da direkt die Umdrehung des Fräswerkzeugs erfaßt wird, besteht auch nicht die Gefahr, daß durch beispielsweise in einem Untersetzungsgetriebe vorhandenes Spiel oder dergleichen Erfassungsfehler erzeugt werden, die zu entsprechenden Fehlern bzw. Schwankungen bei der Durchführung der Fräsvorgänge führen.

Dabei kann vorteilhafterweise vorgesehen sein, daß die Umdrehungserfassungsmittel ein Sensormittel umfassen, welches vorzugsweise nahe einem Randbereich des Fräswerkzeugs angeordnet ist, sowie ein an dem Fräswerkzeug angeordnetes Erfassungsauslösungsmittel, welches bei Vorbeibewegung an dem Sensormittel die Ausgabe eines die Vorbeibewegung wiedergebenden Signals durch das Sensormittel verursacht.

Eine besonders einfach herzustellende Ausgestaltung läßt sich erreichen, wenn das Erfassungsauslösungsmittel durch wenigstens eine Stufe oder dgl. an einer Oberfläche des Fräswerkzeugs gebildet ist und wenn das Sensormittel zum Erfassen einer Abstandsänderung, insbesondere stufenartigen Abstandsänderung, zwischen der Oberfläche des Fräswerkzeugs und dem Sensormittel ausgebildet ist.

Dabei kann das Sensormittel beispielsweise durch einen Näherungsschalter oder dergleichen gebildet sein.

Gemäß einer Ausgestaltungsform kann vorgesehen sein, daß die wenigstens eine Stufe an einer axialen Stirnfläche des Fräswerkzeugs ausgebildet ist und daß das Sensormittel in axialem Abstand zur axialen Stirnfläche angeordnet ist.

Alternativ ist es möglich, daß die wenigstens eine Stufe an einer Radial-Außenumfangsfläche des Fräswerkzeugs angeordnet ist und daß das Sensormittel in radialem Abstand zu der Radial-Außenumfangsfläche angeordnet ist. Bei einer derartigen Ausgestaltung kann vorteilhafterweise die wenigstens eine Stufe durch eine Außenverzahnung im Bereich der Radial-Außenumfangsfläche des Fräswerkzeugs gebildet sein, über welche Außenverzahnung das Fräswerkzeug zur Drehung um die Werkzeugdrehachse antreibbar ist. Eine derartige Ausgestaltung hat einerseits den Vorteil, daß zur Erzeugung der wenigstens einen Stufe keine zusätzlichen Arbeitsvorgänge erforderlich sind.

Andererseits ist eine derartige Außenverzahnung durch eine Vielzahl von Zähnen gebildet, wobei jeder Zahn bei Vorbeibewegung an dem Sensormittel zu einem entsprechenden Signal führt, so daß pro Umdrehung des Fräswerkzeugs viele Erfassungsereignisse vorlegen und somit die Auflösung der Umdrehungserfassung, ohne irgendwelche zusätzlichen Komponenten vorsehen zu müssen, deutlich erhöht werden kann.

Nach einem weiteren Aspekt betrifft die Erfindung ein vermittels einer erfindungsgemäßen Fräseinrichtung durchzuführendes Verfahren zum Befräsen des Schweißbereichs von Punkt-Schweiß-Elektroden zum Zwecke der Korrektur von sich während einer Arbeitsperiode (Schicht) einer Schweißelektrode einstellenden Veränderungen des Schweißbereichs. Hierzu wird vorgeschlagen, daß man mit unterschiedlichem Takt Befräsungsarbeiten an einer Randzone und an einer Wirkfläche des jeweiligen Schweißbereichs vornimmt. Der Sinn dieser Verfahrensmaßnahme ergibt sich aus den obigen Erläuterungen bezüglich der Verwendung unterschiedlicher Fräswerkzeuge. Insbesondere kann das vorstehend angegebene Verfahren unter Verwendung von den weiter oben erwähnten Fräseinrichtungen durchgeführt werden.

Nach einem weiteren Aspekt der Erfindung ist ein vermiltels einer erfindungsgemäßen Fräseinrichtung durchzuführendes Verfahren vorgesehen derart, daß man zur Erstanpassung einer Schweißelektrode an eine bestimmte Schweißaufgabe gegenüber einer Folge von Werkstücken unter Berücksichtigung der geometrischen Einstellung der Schweißelektrode zum jeweiligen Werkstück die Befräsung des Schweißbereichs wahlweise nur in einer Randzone des Schweißbereichs oder in einer Wirkfläche des Schweißbereichs oder - gegebenenfalls getrennt - sowohl in der Randzone als auch der Wirkfläche des Schweißbereichs vornimmt.

Die beiliegenden Figuren erläutern die Erfindung anhand eines Ausführungsbeispiels. Es stellen dar:
- Fig. 1: die Zuordnung von zwei Punkt-Schweiß-Elektroden zu zwei miteinander zu verpunktenden Blechen zum Schweißzeitpunkt;
- Fig. 1a: einen achsenthaltenden Längsschnitt durch eine Punkt-Schweiß-Elektrode;
- Fig. 2: die Zuordnung gemäß Fig. 1 mit Veränderungen im Schweißbereich der Elektroden, die sich nach einer größeren Anzahl von Punkt-Schweißungen einstellen;
- Fig. 3: das Schema des gleichzeitigen Befräsens von zwei durch längeren Einsatz veränderten Punkt-Schweiß-Elektroden;
- Fig. 3a: weitere Details zur Ausbildung eines Fräswerkzeugs;
- Fig. 4: zwei Punkt-Schweiß-Elektroden, die zur Einleitung einer Schweißperiode in Anpassung an die Schweißaufgabe befräst worden sind;
- Fig. 5: das Schema eines Fräswerkzeugs in Verbindung mit einem Elektrodenhalter, einer von diesem getragenen Punkt-Schweiß-Elektrode und einer Andrückvorrichtung zum Andrücken der Punkt-Schweiß-Elektrode an das Fräswerkzeug;
- Fig. 6: eine Draufsicht auf ein Fräswerkzeug, und zwar auf einen von dem Rest der Fräseinrichtung getrennten Fräseinsatz;
- Fig. 7: einen Schnitt nach Linie VII-VII der Fig. 6;
- Fig. 8: eine Ansicht entsprechend Fig. 6 auf eine andere Form eines Fräseinsatzes;
- Fig. 9: einen Schnitt nach Linie IX-IX der Fig. 8;
- Fig. 10: eine Fräseinrichtung mit zwei Fräswerkzeugen;
- Fig. 11: bis 13 schematische Darstellungen von Elektrodenspitzen von Punkt-Schweiß-Elektroden, an welchen verschiedene Anzahlen an Fräsvorgängen durchgeführt worden sind;
- Fig. 14: eine Draufsicht auf ein Fräswerkzeug einer weiteren Ausführungsform der vorliegenden Erfindung;
- Fig. 15: eine schematische Schnittansicht längs einer Linie XV-XV in Fig. 14;
- Fig. 16: eine perspektivische Ansicht einer erfindungsgemäßen Fräseinrichtung mit Absaugmitteln für Späne;
- Fig. 17: eine perspektivische Darstellung eines unteren Plattenteils der Fräseinrichtung in Fig. 16 aus einer Blickrichtung XVII in Fig. 16;
- Fig. 18: eine perspektivische Ansicht eines oberen Plattenteils in Fig. 16 aus einer Blickrichtung XVIII in Fig. 16 und
- Fig. 19: eine schematische Seitenansicht eines beispielsweise in der Fräseinrichtung in Fig. 16 verwendeten Fräswerkzeugs mit einer Umdrehungserfassungseinrichtung.

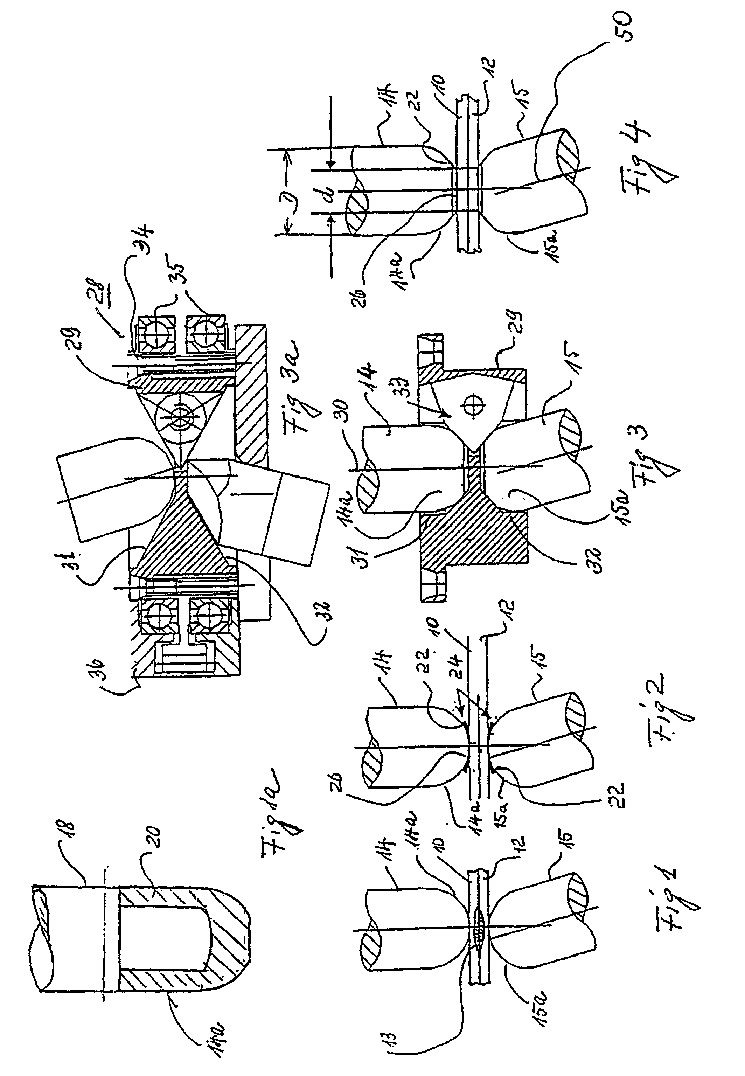

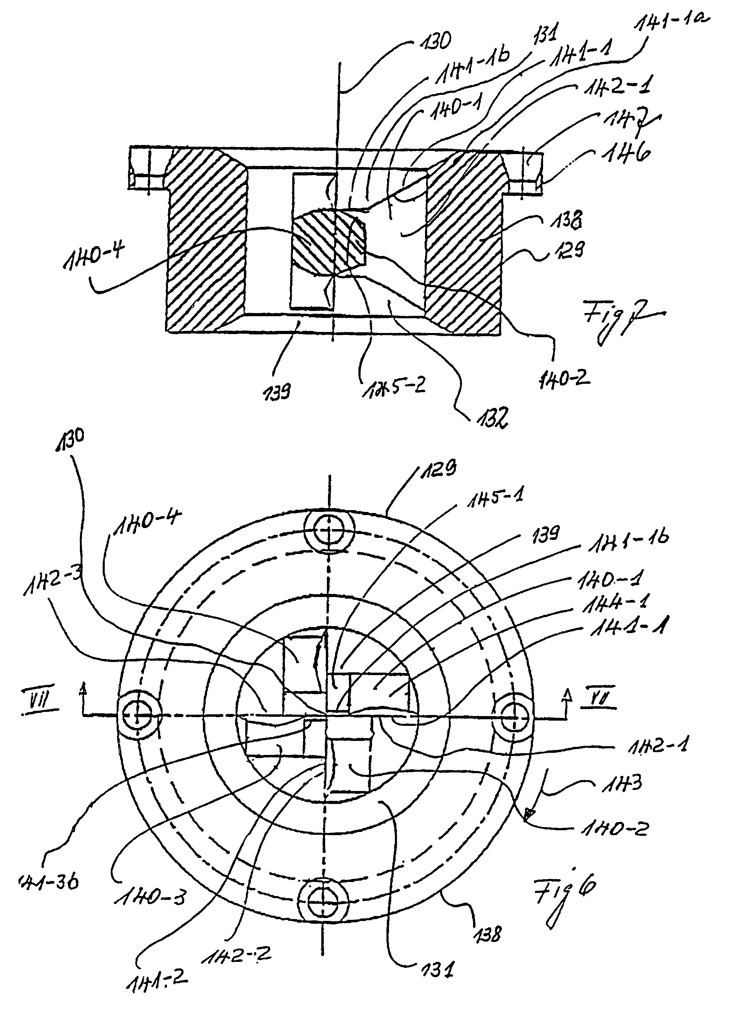

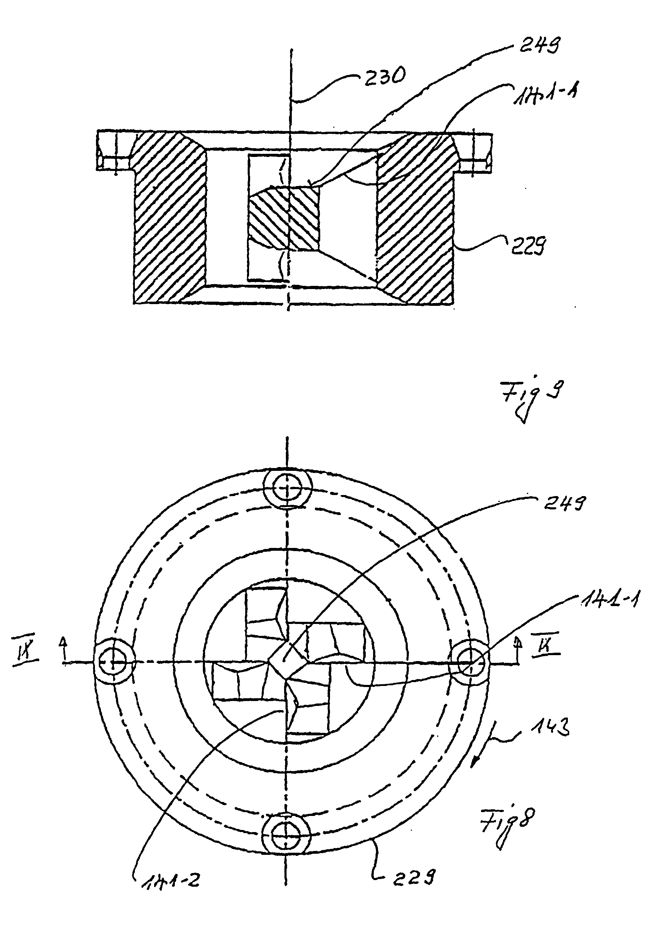

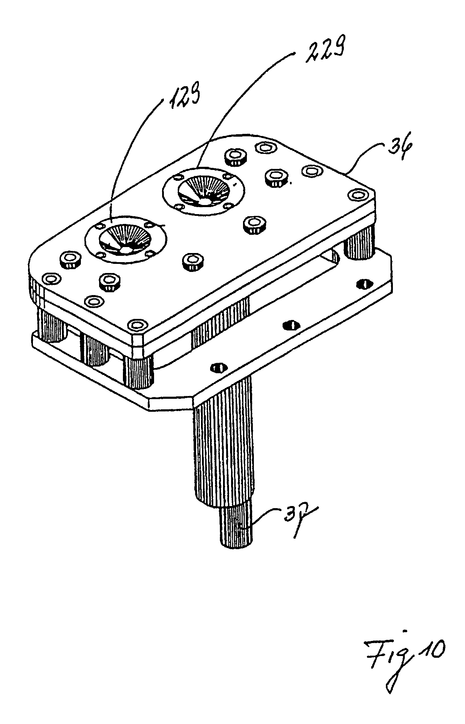

In Figur 1 erkennt man zwei Blechteile 10,12, welche durch eine Punkt-Schweißung, angedeutet durch eine Schweißlinse 13, miteinander zu verbinden sind. Das Punkt-Schweißen erfolgt durch zwei Schweißelektroden 14,15, die in Elektrodenhaltern gehalten sind. Ein solcher Elektrodenhalter ist schematisch in Figur 5 in Verbindung mit der Punkt-Schweiß-Elektrode 14 angedeutet und dort.mit 16 bezeichnet. Der Elektrodenhalter 16 ist Teil eines Schweißroboters (nicht dargestellt). Der Schweißroboter ermöglicht es dem Elektrodenhalter 16 und damit der Punkt-Schweiß-Elektrode 14, an verschiedenen Orten und in verschiedener Orientierung an die Blechteile 10,12 gemäß Figur 1 herangefahren zu werden und Schweißdruck auf die Blechteile 10,12 auszuüben.

Nach Figur 1 sind die Schweißelektroden 14,15 mit sphärischen Schweißbereichen 14a bzw. 15a ausgeführt.

In Figur 1a erkennt man den Aufbau einer Punkt-Schweiß-Elektrode. Diese besteht aus einem elektrisch leitenden Elektrodenschaft 18, dessen zum Eingriff mit einem Blechteil 10 bestimmter Schweißbereich 14a von einer Elektrodenkappe 20 gebildet ist, welche auf dem Elektrodenschaft 18 formschlüssig sitzt und etwa aufgeschrumpft oder aufgelötet ist.

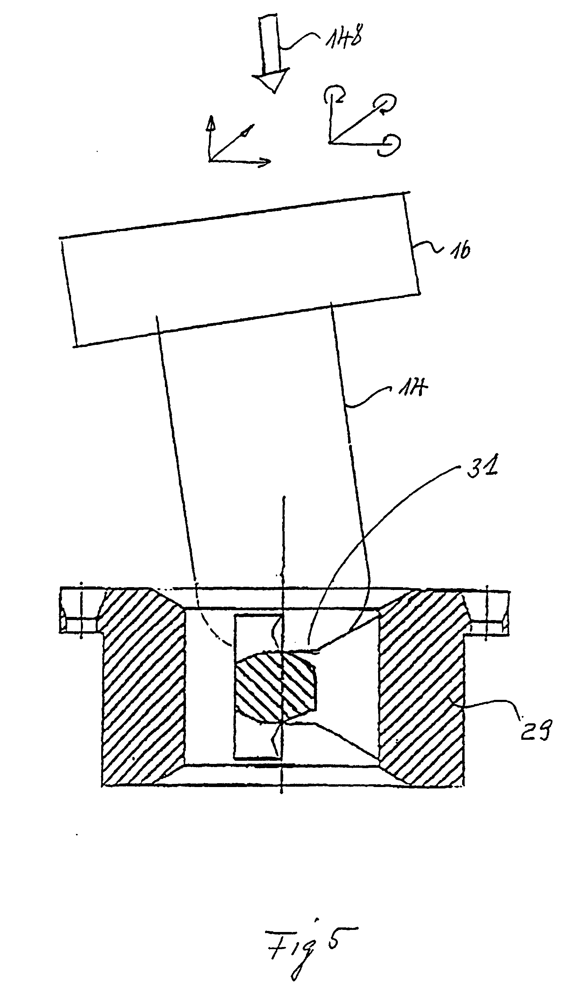

Wenn die Schweißelektroden 14,15 zum Beginn einer Schicht, etwa in einer Fertigungsstraße, zum Zusammenschweißen von Kfz-Karosserien, die in Figur 1 dargestellte sphärische Form haben, so stellt sich nach einiger Zeit, also etwa nach 100 oder 200 Punkt-Schweiß-Vorgängen eine Veränderung an den Elektroden 14,15 ein, die in Figur 2 dargestellt ist. Es bilden sich in einer Randzone 22 der Schweißbereiche 14a,15a Abbrandwülste 24. Diese Abbrandwülste 24 vergrößern die eigentliche Wirkfläche 26, die beim Schweißen stromübertragend an den Blechteilen 10 bzw. 12 anliegt. Der Schweißstrombedarf steigt, und es kommt zu Veränderungen der Qualität der Schweißpunkte. Auch kann sich bei Verschweißung von verzinkten Blechteilen eine Zinkoxidschicht an der Wirkfläche 26 bilden, die die Schweißqualität ebenfalls vermindert.

Um diese nach einigen hundert Punkt-Schweißungen auftretenden Veränderungen zu kompensieren, ist es bekannt, wie in Figuren 3 und 3a dargestellt, die Schweißelektroden 14,15 mittels einer Fräseinrichtung zu befräsen. Figur 3a läßt dabei das Fräswerkzeug 28 als Teil einer Fräseinrichtung erkennen, während Figur 3 lediglich einen Fräseinsatz 29 als Teil des Fräswerkzeugs 28 erkennen läßt.

In Figur 3 erkennt man an dem Fräseinsatz 29 zwei in Richtung der Werkzeugdrehachse 30 voneinander abgekehrte Aufnahmepfannen 31 bzw. 32. Zum Befräsen der Elektroden 14 und 15 werden diese gesteuert durch eine elektronische Steuerungseinrichtung und angetrieben durch Stellmotore des Schweißroboters mit ihren Schweißbereichen 14a und 15a in die Aufnahmepfannen 31,32 eingeführt und dort zentriert. Im Bereich der Begrenzungsfläche der Aufnahmepfannen 31,32 ist ein Fräsmesser 33 eingesetzt, das zum Befräsen der beiden Elektroden 14,15 bestimmt und geeignet ist.

Die Ausführungsform nach Figur 3 ist an sich bekannt und nicht Gegenstand der Erfindung.

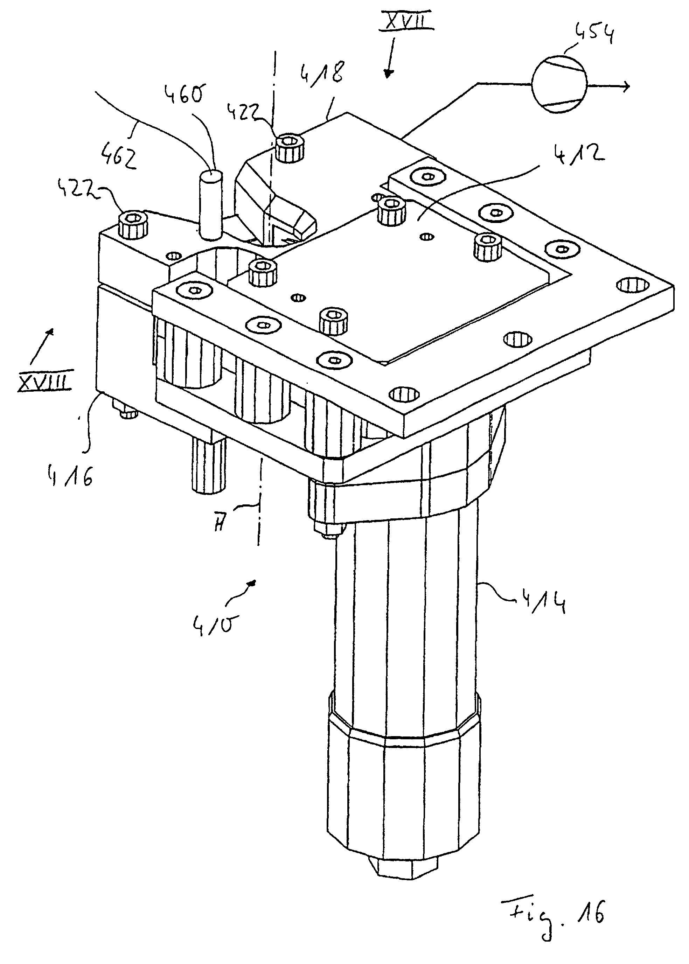

In Figur 3a erkennt man, daß der Fräseinsatz 29 in einen Werkzeugrotor 34 eingesetzt ist, welcher durch zwei Kugellager 35 in einem Werkzeugträger 36 (siehe auch Figur 10) gelagert und durch eine Antriebsspindel 37 über ein Verzweigungsgetriebe angetrieben wird.

In Figur 4 erkennt man die beiden Elektroden 14 und 15 wiederum in Eingriff mit den beiden Blechteilen 10,12, nachdem eine Befräsung in dem Fräswerkzeug 28 stattgefunden hat. Man kann sich vorstellen, daß die Elektroden 14,15 durch die Befräsung für den Start einer Serie von Schweißoperationen, so wie in Figur 4 dargestellt, geformt worden sind. Alternativ kann der Zustand der Figur 4 auch durch Nachbefräsung von verschlissenen Elektroden 14,15 gemäß Figur 2 erreicht werden. Es sei an dieser Stelle erwähnt, daß die Wirkfläche 26 beispielsweise einen Durchmesser d von 5 mm - 10 mm hat, während der Durchmesser D der Elektrode 14,15 beispielsweise 13 mm - 20 mm beträgt. Die Wirkfläche 26 ist gemäß Figur 4 entweder plan oder zum Blechteil 10 hin leicht konvex gekrümmt mit einem Krümmungsradius von wenigstens 30 mm.

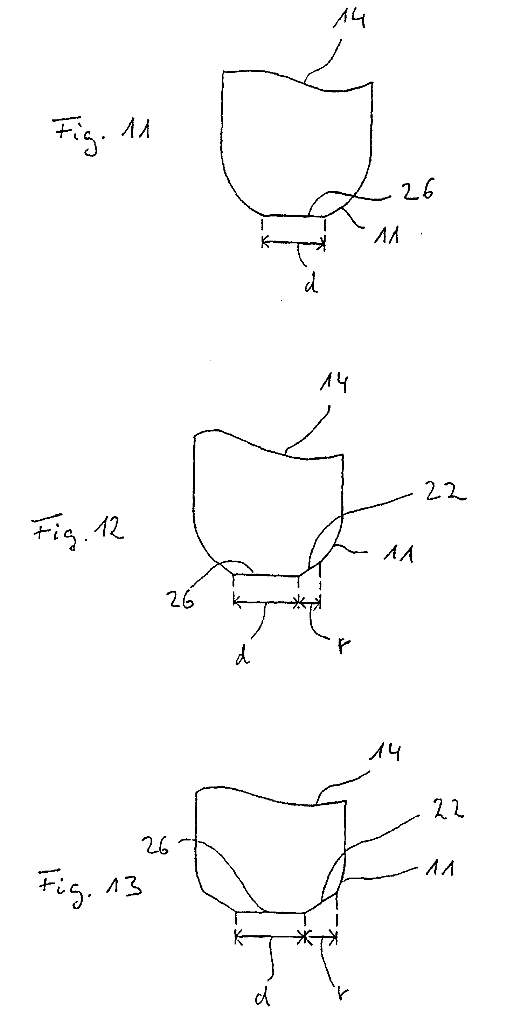

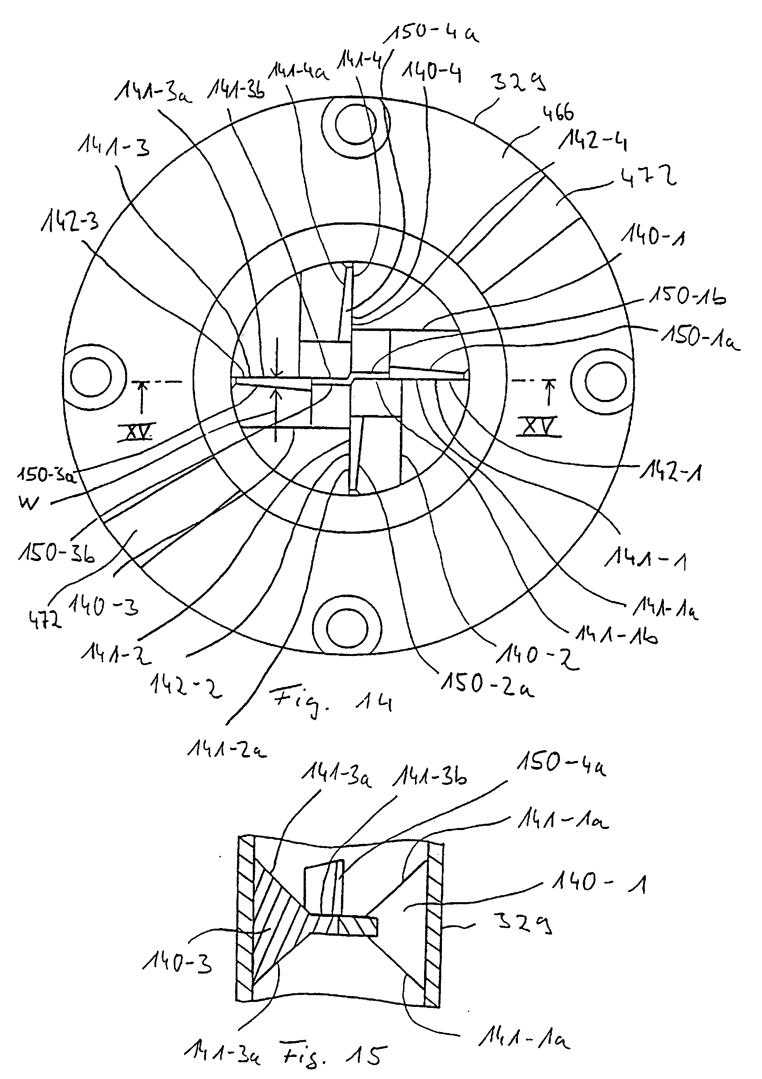

In Figuren 6 und 7 erkennt man einen Fräseinsatz 129. Der Fräseinsatz 129 umfaßt einen Ringkörper 138 und im Lumen dieses .Ringkörpers 138 ein Speichenkreuz 139, gebildet von insgesamt 4 Speichen 140-1, 140-2, 140-3 und 140-4. Die Speichen 140-1 bis 140-4 können untereinander sämtliche gleich sein, jedenfalls sind, wie in Figuren 6 und 7 dargestellt, jeweils zwei um 180° gegeneinander versetzte Speichen 140-1 und 140-3 sowie 140-2 und 140-4 paarweise untereinander gleich. Jede der Speichen 140-1 bis 140-4 besitzt eine Fräskante 141-1, 141-2 usw. in einer die Werkzeugdrehachse 130 enthaltenden Fläche 142-1, 142-2 usw.

Die Flächen 142-1, 142-2 usw. laufen in der Werkzeugdrehrichtung 143 der jeweiligen Speiche voraus. Die Flächen 142-1 und 142-3 liegen in einer gemeinsamen, die Drehachse 130 enthaltenden Ebene.

Wie aus Figur 7 zu ersehen, ist die Fräskante 141-1 unterteilt in einen radial äußeren Fräskantenabschnitt 141-1a und einen radial inneren Fräskantenabschnitt 141-1b. Der Fräskantenabschnitt 141-1a ist gebildet durch die Verschneidung der Fläche 142-1 mit einer Dachfläche 144-1, die in Figur 6 zu erkennen ist und entgegen der Drehrichtung 143 von der Zeichenebene nach hinten abfällt. Der Fräskantenabschnitt 141-1b ist gebildet durch die Verschneidung der Fläche 142-1 mit einer an die Dachfläche 144-1 anschließenden Dachfläche 145-1.

In Figur 7 erkennt man die der Speiche 140-2 zugehörige Dachfläche 145-2. Durch diese Dachfläche 145-2 wird die Bildung des bis zur Drehachse 130 reichenden Kantenabschnitts 141-1b ermöglicht.

Das Speichenkreuz 139 ist nach einem pulvermetallurgischen Verfahren als Sinterkörper hergestellt und mit dem Ringkörper 129 verbunden, beispielsweise durch Hartlöten. Ein Flansch 146 mit Befestigungslöchern 147 dient dem Einbau des Fräseinsatzes 129 in den Werkzeugträger 36 gemäß Figur 3a.

Bei der Ausführungsform des Fräseinsatzes 129 gemäß Figur 7 ist die Aufnahmepfanne 131 durch die insgesamt 4 Fräskanten 141-1 bis 141-4 gebildet. Durch das Vorhandensein der insgesamt 4 Speichen 140-1 bis 140-4 ist der Abstand der Speichen in Umfangsrichtung so eingeengt, daß die Punkt-Schweiß-Elektrode 14 (vgl. Figur 5) durch den Eingriff mit den 4 Fräskanten 141-1 bis 141-4 hinreichend zentriert ist und nicht ausweichen kann, wenn die Elektrode 14 gemäß Figur 5 durch eine Andrückeinrichtung 148 in die Aufnahmepfanne 31 gedrückt wird. Für die Unterseite, d.h. für die Pfanne 132 in Figur 7, gilt das bezüglich der Aufnahmepfanne 131 Gesagte.

In Figur 5 ist angedeutet, daß der Elektrodenhalter 16 mehrere, bis zu 3 translatorische Freiheitsgrade und mehrere, bis zu 3 rotatorische Freiheitsgrade besitzt, um somit die Elektrode 14 in jeder beliebigen Lage an den Fräseinsatz 29 heranführen zu können. Diese Freiheitsgrade dienen auch dazu, um gemäß Figuren 1 und 2 die Elektroden in beliebiger Lage und Orientierung an die Blechteile 10,12 heranführen zu können.

Nach vorstehendem ist klar, daß die Ausführungsform des Fräseinsatzes 129 nach Figur 7 dazu bestimmt ist, um einen Schweißbereich einer Elektrode sowohl in der Randzone 22 (siehe Figur 2) als auch im Bereich der Wirkfläche 26 zu bearbeiten: Die Fräskantenabschnitte 141-1a, 141-2a usw. dienen zur Bearbeitung der Randzone 22, während die Fräskantenabschnitte 141-1b, 141-2b usw. zur Bearbeitung der Wirkfläche 26 dienen.

Die Figuren 8 und 9 zeigen einen Fräseinsatz 229, ähnlich dem Fräseinsatz 129 der Figuren 6 und 7. Man erkennt aus den Figuren 8 und 9, daß die Fräskanten 141-1, 141-2 usw. hier in eine zur Drehachse 230 orthogonale Zentralfläche 249 einlaufen, daß also die radial inneren Fräskantenabschnitte, welche in der Ausführungsform nach den Figuren 6 und 7 vorhanden waren, um die Wirkfläche 26 einer Punkt-Schweiß-Elektrode 14 zu befräsen, entfallen. Damit wird offenbar, daß der Fräseinsatz 229 der Figuren 8 und 9 dazu bestimmt ist, nur die Randzone 22 gemäß Figur 2 zu befräsen, nicht aber die Wirkfläche 26.

Beim Betrieb einer Schweißstraße wird beispielsweise ausgehend von Schweißelektroden 14,15, wie in Figur 1 dargestellt, zunächst vor Beginn des Starts des Schweißroboters eine Befräsung mit einem Fräseinsatz 129 gemäß Figuren 6 und 7 vorgenommen, um die Wirkfläche 26 in Anpassung an die Lage des Blechs 10 gemäß Figur 1 gegenüber der Elektrodenachse 50 (siehe Figur 4) zu orientieren. Nach beispielsweise 300 Punkt-Schweiß-Vorgängen hat sich ein Abbrand 24, wie in Figur 2 dargestellt, gebildet. Dieser wird dann unter Verwendung eines Fräseinsatzes 229 gemäß Figuren 8 und 9 abgetragen, was nach etwa 600 - 900 Punkt-Schweiß-Vorgängen wiederholt wird. Nach etwa 1200 Punkt-Schweiß-Vorgängen hat sich an der Wirkfläche 26 eine Zinkoxidschicht gebildet (dies unter der Voraussetzung, daß verzinkte Bleche geschweißt werden) und es wird notwendig, zur Herabsetzung des Stromübergangwiderstands auch die Wirkfläche 26 zu befräsen. In diesem Zeitpunkt wird dann die Befräsung mittels eines Fräseinsatzes 129 gemäß Figuren 6 und 7 ausgeführt.

In Figur 10 erkennt man an dem Werkzeugträger 36 einen Fräseinsatz 129 gemäß Figuren 6 und 7 und einen Fräseinsatz 229 gemäß Figuren 8 und 9. Die Fräseinrichtung gemäß Figur 10 steht also für die beiden notwendigen Befräsungsmaßnahmen alternativ zur Verfügung. Das Programm für die Bewegung der Schweißelektroden 14,15 ist beispielsweise so aufgebaut, daß es nach 300, 600 und 900 Schweißvorgängen für ein Einfahren der Schweißelektrode 14,15 in den Fräseinsatz 229 sorgt und nach etwa 1200 Punkt-Schweiß-Vorgängen für ein Einfahren der Schweißelektrode 14,15 in den Fräseinsatz 129 sorgt. Das Programm sorgt auch für die Andrückung der Schweißbereiche der Elektroden an die Fräskanten der Fräseinsätze und für die Einstellung der Drehzahl der Fräseinsätze.

Die Figuren 14 und 15 zeigen eine alternative Ausgestaltungsform eines Fräswerkzeugs bzw. Fräseinsatzes 329. Das Fräswerkzeug 329 ist im wesentlichen wie die vorangehend beschriebenen Werkzeuge 129 und 229 aufgebaut, so daß im nachfolgenden hauptsächlich auf die Unterschiede eingegangen wird.

Das Fräswerkzeug 329 umfaßt im wesentlichen wieder vier Speichen 140-1, 140-2, 140-3, 140-4, an welchen wiederum Fräskanten 141-1, 141-2, 141-3, 141-4 derart gebildet sind, daß sie in die Werkzeugdrehachse enthaltenen und zur Zeichenebene der Fig. 14 orthogonal stehenden Ebenen 142-1, 142-2, 142-3, 142-4 enthalten sind. Wie in Fig. 14 zu erkennen ist, sind die Fräskanten der Speichen 140-1, 140-2 jeweils durch einen äußeren Fräskantenabschnitt 141-1a, 141-3a und einen inneren Fräskantenabschnitt 141-1b und 141-3b gebildet. Die Fräskanten der Speichen 140-2 und 140-4 umfassen lediglich die entsprechenden äußeren Fräskantenabschnitte 141-2a und 141-4a. Ferner ist bei jeder der Fräskanten bzw. jedem der Fräskantenabschnitte eine diesen jeweils zugeordnete Elektrodenanlagefläche 150-1a, 150-1b, 150-2a, 150-3a, 150-3b, 150-4a, 150-4b vorgesehen. D. h. es ist jedem äußeren Fräskantenabschnitt eine äußere Elektrodenanlagefläche zugeordnet und jedem inneren Fräskantenabschnitt eine innere Elektrodenanlagefläche zugeordnet. Die Elektrodenanlageflächen sind dabei jeweils derart orientiert, daß sie im wesentlichen orthogonal zu den die Drehachse enthaltenden Ebenen 142-1 bis 142-4 liegen, um somit eine geeignete Auflage der Elektroden zu gewährleisten.

Wie in Fig. 14 ferner zu erkennen ist, ist jede der äußeren Elektrodenanlageflächen 150-1a, 150-2a, 150-3a und 150-4a in ihrer Breite w orthogonal zur jeweils zugeordneten Fräskante derart ausgebildet, daß diese Breite w von radial innen nach radial außen abnimmt. Dies führt dazu, daß, wie vorangehend mit Bezug auf die Figuren 11 bis 13 beschrieben, bei zunehmend breiter werdender Randzone der Punkt-Schweiß-Elektroden keine entsprechend proportionale Zunahme der Elektrodenanlageflächen auftritt, sondern der inkrementelle Zuwachs der Elektrodenanlageflächen zunehmend kleiner wird. Dies führt dazu, daß bei gleichbleibender Anpreßkraft der Punkt-Schweiß-Elektroden an das Fräswerkzeug 329 eine mit zunehmender Verbreiterung der Randzone auftretende Verringerung der Flächenpressung deutlich gesenkt werden kann und somit auch nach längerer Elektrodenlebensdauer noch nahezu gleichbleibende Fräsbedingungen vorgesehen werden können.

Dies kann weiter dadurch unterstützt werden, daß die Punkt-Schweiß-Elektroden durch die vorangehend beschriebene Andruckeinrichtung (148 in Fig. 5) derart gegen das Fräswerkzeug gepreßt werden, daß, ebenfalls mit zunehmender Lebensdauer der Elektroden, die Anpreßkraft der Elektroden gegen das Fräswerkzeug beispielsweise von einem Anfangswert bei neuen Elektroden im Bereich von 2 kN auf einen Endwert bei nahezu verbrauchten Elektroden im Bereich von 5 kN erhöht wird.

Zur Erzeugung hochqualitativer Fräsflächen hat es sich als besonders vorteilhaft erwiesen, daß lediglich bei einem Paar von diametral gegenüberliegenden Speichen 140-1, 140-3 auch die radial inneren Fräskantenabschnitte 141-1b bzw. 141-3b vorgesehen sind, deren Elektrodenanlageflächen 150-1b und 150-3b dann eine im wesentlichen konstante Breite aufweisen.

Hinsichtlich des weiteren Aufbaus, insbesondere der auf die Fräskanten bzw. Elektrodenanlageflächen folgenden Schrägflächen, wird auf die vorangehenden Ausführungsformen verwiesen.

Die Figur 16 zeigt eine Fräseinrichtung 410 mit einem Werkzeugträger 412 für ein in der Darstellung der Fig. 16 nicht erkennbares Fräswerkzeug. Das in dem Werkzeugträger 412 drehbar angeordnete Fräswerkzeug ist bei der Fräseinrichtung 410 durch eine Turbine 414 von herkömmlichem Aufbau angetrieben.

Die Fräseinrichtung 410 umfaßt ferner in dem Bereich des Werkzeugträgers 412, in dem das Fräswerkzeug angeordnet ist, ein unteres Plattenteil 416 sowie ein oberes Plattenteil 418. Das untere und das obere Plattenteil 416, 418 sind am Werkzeugträger 412 derart angeordnet, daß sie diesen im Bereich des Fräswerkzeugs zwischen sich aufnehmen. Dazu weist beispielsweise, wie in Fig. 17 zu erkennen, das untere Plattenteil 416 eine Aufnahmevertiefung 420 auf, in die beim Ansetzen des unteren Plattenteils 416 an den Werkzeugträger 412 dieser im Bereich des Fräswerkzeugs nahezu vollständig eingeführt wird. Nachfolgend wird das obere Plattenteil 418 aufgesetzt und beispielsweise durch Schraubbolzen 422 fest mit dem unteren Plattenteil 416 verbunden. Dabei kann der Werkzeugträger 412 im Bereich des Fräswerkzeugs, d.h. in dem in die Aufnahmevertiefung 420 eingeführten Bereich zwischen den beiden Plattenteilen 416 und 418 geklemmt werden. Der Werkzeugträger 412 ist durch einen Randbereich 424 des unteren Plattenteils 416 umgeben, welcher beispielseweise über Dichtungsmittel oder dergleichen an einer dem Werkzeugträger 412 zugewandten Seite 426 des oberen Plattenteils 418 anliegt.

Das untere Plattenteil 416 und das obere Plattenteil 418 weisen jeweils eine Elektrodeneinführöffnung 428 bzw. 430 auf, welche bei mit dem werkzeugträger 412 verbundenen Plattenteilen 416, 418 in Richtung der Werkzeugdrehachse mit dem Fräswerkzeug ausgerichtet sind. Durch die Elektrodeneinführöffnungen 428 bzw. 430 können Punkt-Schweiß-Elektroden zum Befräsen zum Fräswerkzeug geführt werden. Um dieses Heranführen weiter zu unterstützen, weisen sowohl das untere Plattenteil 416 als auch das obere Plattenteil 418 jeweils einen Elektrodeneinführkanal 432, 434 auf. Durch die Elektrodeneinführkanäle 432, 434, welche jeweils durch trichterförmig aufeinander zulaufende Seitenflächen 436, 438 bzw. 440, 442 gebildet sind, können die Punkt-Schweiß-Elektroden in seitlicher Richtung an das Fräswerkzeug herangeführt werden und werden durch die trichterförmig aufeinander zulaufenden Flächen 436, 438, 440, 442 in die Elektrodeneinführöffnung 428 bzw. 430 geleitet.

Die Elektrodeneinführöffnungen 428, 430 sind jeweils durch erste Absaugkanalabschnitte 444 bzw. 446 umgeben. Die ersten Absaugkanalabschnitte 444, 446 stehen in Verbindung mit zweiten Absaugkanalabschnitten, von welchen lediglich in Fig. 18 der im oberen Plattenteil 418 ausgebildete zweite Absaugkanalabschnitt 448 erkennbar ist. Ferner ist im unteren Plattenteil 416 ein Verbindungskanalabschnitt 450 ausgebildet, durch den bei miteinander verbundenen unteren und oberen Plattenteilen 416, 418 die zweiten Absaugkanalabschnitte 448 in ihren von den ersten Absaugkanalabschnitten 444, 446 entfernten Endabschnitten miteinander verbunden sind. Der Verbindungskanalabschnitt 450 führt zu einer Anschlußöffnung 452, an welcher eine Unterdruckpumpe 454, welche in Fig. 16 schematisch dargestellt ist, angeschlossen werden kann. Bei einer derart aufgebauten Fräseinrichtung 410 werden die beim Befräsen von Punkt-Schweiß-Elektroden erzeugten Frässpäne durch eine durch die Unterdruckpumpe 454 erzeugte Saugwirkung aus dem Bereich des Fräswerkzeugs über die ersten Absaugkanalabschnitte 444, 446, die zweiten Absaugkanalabschnitte 448 durch die Öffnung 452 und die Pumpe 454 abgesaugt und können beispielsweise in einen Sammelbehälter oder derart abgegeben werden. Es ist somit möglich, die beim Befräsen erzeugten Späne vom Fräswerkzeug wegzuführen, so daß einerseits der Fräsvorgang selbst durch herumwirbelnde Späne nicht nachteilhaft beeinflußt wird und andererseits die Späne nicht in Baukomponenten der Fräseinrichtung eindringen können und diese beschädigen können.

Obgleich in den Figuren nicht dargestellt, ist es möglich, daß der Werkzeugträger 412 in seinem zwischen dem unteren Plattenteil 416 und dem oberen Plattenteil 418 angeordneten Bereich jeweils unter Zwischenlagerung von Dichtmaterial an der Oberfläche 425 des unteren Plattenteils 416 und der Oberfläche 426 des oberen Plattenteils 418 anliegt. In einem derartigen Falle kann aufgrund der erhöhten Dichtwirkung die Absaugwirkung verbessert werden, wobei dann das Dichtmaterial zwischen den Plattenteilen 416, 418 und dem Werkzeugträger 412 jeweils einen Wandungsbereich, nämlich den dem Werkzeugträger 412 zugewandten Wandungsbereich, der Absaugkanalabschnitte bildet. Ist kein derartiges Dichtungsmaterial vorhanden, so bildet der Werkzeugträger 412 durch Anlage an den Flächen 425, 426 des ersten bzw. zweiten Plattenteils 416, 418 jeweils im Bereich der ersten und zweiten Kanalabschnitte selbst eine Wandung der ansonsten zu den Flächen 425, 426 hin offenen Kanalabschnitte.

Ferner kann eine Lufteinspritzdüse beispielsweise im Bereich der ersten Absaugkanalabschnitte 444, 446 angeordnet sein, durch welche Düse in diesen Absaugkanalabschnitten 444, 446 _eine Turbulenz erzeugt wird, die in Zusammenwirkung mit dem durch die Unterdruckpumpe 454 erzeugten Unterdruck das Abführen von Spänen aus dem Bereich des Fräswerkzeugs unterstützt.

Die Unterdruckpumpe 454 kann aus jedem für derartige Anwendungen geeigneten Typ bestehen. Es werden jedoch derartige Unterdruckpumpen bevorzugt, die einen Unterdruck unter Verwendung des Coanda-Effekts oder des Bernoulli-Effekts erzeugen. Dies liegt daran, daß derartige Pumpen den Unterdruck nicht durch mechanische Bewegung irgendwelcher Kolben oder rotierender Teile erzeugen, deren Betrieb bei Eintreten von gepumpten Spänen oder dergleichen beeinträchtigt wäre. Vielmehr wird der Unterdruck durch Strömung eines Mediums, insbesondere eines Gases oder einer Flüssigkeit, erzeugt, auf welches das Eintreten von Spänen in eine Pumpenkammer keine nachteilhafte Einwirkung ausübt.

Wie in Fig. 16 ferner zu erkennen, ist am oberen Plattenteil 418 ein Umdrehungssensor 460 angeordnet, welcher über eine Signalleitung 462 mit einer Steuereinrichtung der Fräseinrichtung 10 verbunden ist. Der Umdrehungssensor 460 dient dazu, direkt die Umdrehung des Fräswerkzeugs in dem Werkzeugträger 412 zu erfassen, um dadurch den Fräsvorgang in geeigneter bzw. exakter Weise durchführen zu können. Dazu weist das Fräswerkzeug eine einem Erfassungsbereich des Umdrehungssensors 460 in geringem Abstand gegenüberliegende Stufe 464 an seiner Oberfläche 466 auf, wie beispielsweise in Fig. 19 dargestellt. Die Stufe 464 ist an einer sich an der Oberfläche 466 des Fräswerkzeugs 468 koaxial um die Werkzeugdrehachse A erstreckenden rampenartigen Schrägfläche 470 ausgebildet. Jedesmal, wenn die Stufe 464 sich bei einer Umdrehung des Fräswerkzeugs 468 an dem Umdrehungssensor 460 vorbeibewegt, gibt dieser ein Signal aus, das die Vorbeibewegung anzeigt, beispielsweise einen Signalimpuls. Durch den in Fig. 9 dargestellten Umdrehungssensor 460, welcher einen Näherungsschalter bildet, kann also die Umdrehung des Fräswerkzeugs 468 direkt erfaßt werden und somit der Fräsvorgang geeignet gesteuert werden, indem beispielsweise bei jedem Fräsvorgang eine bestimmte definierte Anzahl von Umdrehungen des Fräswerkzeugs 468, beispielsweise im Bereich von drei bis fünf Umdrehungen, durchgeführt wird.

Um die Erfassungsgenauigkeit des Umdrehungssensors 460 weiter erhöhen zu können, kann beispielsweise an der Oberfläche 466 eine Mehrzahl derartiger durch axial vorspringende Abschnitte 472 (Fig. 14) gebildeter Stufen vorgesehen werden. Entsprechend der Erhöhung der Anzahl an Stufen erhöht sich auch die Auflösung bei der Umdrehungserfassung und somit die Genauigkeit beim Steuern des Fräsvorgangs.

Alternativ zu der in Fig. 19 dargestellten Anordnung des Umdrehungssensors ist es möglich, diesen nicht in axialem Abstand zum Fräswerkzeug 468 sondern in radialem Abstand zu diesem anzuordnen (siehe 460' in Fig. 19). Der Umdrehungssensor kann dann unmittelbar gegenüberliegend von an einer Außenumfangsfläche des Fräswerkzeugs oder einer mit diesem fest verbundenen Komponente vorgesehenen Zähnen einer Antriebsverzahnung angeordnet werden. Über diese Verzahnung kann das Fräswerkzeug zur Drehung um die Werkzeugsachse A angetrieben werden. Der Umdrehungssensor kann dann den Vorbeigang von jedem einzelnen Zahn der Verzahnung erfassen, so daß pro Umdrehung eine Vielzahl an Erfassungsereignissen auftritt und die Erfassungsgenauigkeit dementsprechend erhöht werden kann. Bei einer derartigen Ausgestaltung kann also lediglich durch geeignete Positionierung des Umdrehungssensors unter Ausnutzung bereits vorhandener Komponenten, nämlich der Zähne, eine sehr genaue Erfassung der Umdrehung des Fräswerkzeugs und eine dementsprechend genaue Steuerung bzw. Regelung eines Fräsvorgangs erhalten werden.

## Patentansprüche

1. Fräseinrichtung zum Befräsen des Schweißbereichs von durch. einen Elektrodenhalter gehaltenen Punkt-Schweiß-Elektroden, umfassend einen Werkzeugträger (412) mit wenigstens einem darin um eine Werkzeugdrehachse (A) drehbar gelagerten. Fräswerkzeug und Drehantriebsmitteln für dieses Fräswerkzeug, wobei vorzugsweise das Fräswerkzeug mit wenigstens einer zur Werkzeugdrehachse (A) im wesentlichen konzentrischen, konkaven Aufnahmepfanne für die Aufnahme des Schweißbereichs der jeweiligen Punkt-Schweiß-Elektrode mit jeweils wenigstens einer Fräskante im Bereich dieser wenigstens einen Aufnahmepfanne zum Befräsen des jeweiligen Schweißbereichs ausgeführt ist,
**gekennzeichnet durch**
Absaugmittel (416,418) zum Absaugen von während des Befräsens erzeugten Spänen oder dgl., wobei die Absaugmittel (416,418) umfassen: wenigstens an einer Seite des Fräswerkzeugs in Richtung der Werkzeugdrehachse (A) ein Plattenteil (416,418) mit einer Elektrodeneinführöffnung (428,430), **durch** welche eine Punkt-Schweiß-Elektrode an das Fräswerkzeug heranführbar ist, und mit einem ersten die Elektrodeneinführöffnung (428,430) wenigstens bereichsweise umgebenden und in Verbindung mit Unterdruckerzeugungsmitteln stehenden Absaugkanalabschnitt (444,446).

2. Fräseinrichtung nach Anspruch 1,
**dadurch gekennzeichnet,**
**daß** die Absaugmittel (416, 418) ein wenigstens an einer von in Richtung der Werkzeugdrehachse (A) entgegengesetzten Seiten des Werkzeugträgers (412) anordenbares Plattenteil (416, 418) umfassen mit einer mit der wenigstens einen Aufnahmepfanne in Richtung der Werkzeugdrehachse (A) in Ausrichtung bringbaren Elektrodeneinführöffnung (428, 430), einem ersten Absaugkanalabschnitt (444, 446), welcher die Elektrodeneinführöffnung (428, 430) wenigstens bereichsweise umgibt, und einem zweiten Absaugkanalabschnitt (448), welcher den ersten Absaugkanalabschnitt (444, 446) mit einem Unterdruckerzeugungsmittel-Anschlußbereich (452) des wenigstens einen Plattenteils (416) verbindet.

3. Fräseinrichtung nach Anspruch 2,
**dadurch gekennzeichnet,**
**daß** der erste und/oder der zweite Absaugkanalabschnitt (444, 446, 448) in dem wenigstens einen Plattenteil (416, 418) zu einer in Anlage an dem Werkzeugträger (412) bringbaren Oberfläche (425, 426) des wenigstens einen Plattenteils (416, 418) offen sind.

4. Fräseinrichtung nach Anspruch 2 oder 3,
**dadurch gekennzeichnet,**
**daß** in dem wenigstens einen Plattenteil (416, 418) ein sich von der Elektrodeneinführöffnung (428, 430) im wesentlichen quer zur Werkzeugdrehachse (A) wegerstreckender Elektrodeneinführkanal (432, 434) vorgesehen ist.

5. Fräseinrichtung nach Anspruch 4,
**dadurch gekennzeichnet,**
**daß** der Elektrodeneinführkanal (432, 434) die Elektrodeneinführöffnung (428, 430) mit einer Seitenrandfläche des wenigstens einen Plattenteils (416, 418) verbindet und sich vorzugsweise in Richtung der Werkzeugdrehachse (A) durch das gesamte Plattenteil (416, 418) hindurch erstreckt.

6. Fräseinrichtung nach Anspruch 4 oder 5,
**dadurch gekennzeichnet,**
**daß** der Elektrodeneinführkanal (432, 434) durch vorzugsweise trichterförmig auf die Elektrodeneinführöffnung (428, 430) zu verlaufende Elektrodenleitflächen (436, 438, 440, 442) im wenigstens einen Plattenteil (416, 418) gebildet ist.

7. Fräseinrichtung nach einem der Ansprüche 2 - 6,
**dadurch gekennzeichnet,**
**daß** zwei Plattenteile (416, 418) vorgesehen sind, wobei jeweils ein Plattenteil (416, 418) an jeder von in Richtung der Werkzeugdrehachse (A) entgegengesetzten Seiten des Werkzeugträgers (412) anordenbar ist.

8. Fräseinrichtung nach Anspruch 7,
**dadurch gekennzeichnet,**
**daß** in wenigstens einem (416) der Plattenteile (416, 418) an seiner zur Anlage am Werkzeugträger (412) bringbaren Seite eine Werkzeugträger-Aufnahmevertiefung (420) vorgesehen ist, derart, daß beim Verbinden des Werkzeugträgers (412) mit den Plattenteilen (416, 418) im Bereich der einander zugewandten Seiten der Plattenteile eine Ausnehmung gebildet ist, in welcher der Werkzeugträger (412) im wesentlichen vollständig aufgenommen ist.

9. Fräseinrichtung nach Anspruch 8,
**dadurch gekennzeichnet,**
**daß** die Plattenteile (416, 418) in einem die Aufnahmeausnehmung umgebenden Randbereich (424), vorzugsweise unter Zwischenlagerung von Dichtungsmitteln, wenigstens bereichsweise zur Anlage aneinander bringbar sind.

10. Fräseinrichtung nach einem der Ansprüche 7 - 9,
**dadurch gekennzeichnet,**
**daß** die zweiten Absaugkanalabschnitte (448) der beiden Plattenteile (416, 418) in ihren von den jeweiligen ersten Absaugkanalabschnitten (444, 446) entfernten Endbereichen durch einen in wenigstens einem (416) der Plattenteile (416, 418) ausgebildeten Verbindungskanalabschnitt (450) miteinander verbunden sind, und daß der Verbindungskanalabschnitt (450) die zweiten Absaugkanalabschnitte (448) in jedem Plattenteil (416, 418) mit dem Unterdruckerzeugungsmittel-Anschlußbereich (452) verbindet.

11. Fräseinrichtung nach einem der Ansprüche 1 - 10 ferner umfassend Unterdruckerzeugungsmittel (454), welche vorzugsweise eine Vakuumpumpe (454) umfassen.

12. Fräseinrichtung nach Anspruch 2 und gewünschtenfalls einem der Ansprüche 3 - 11, ferner umfassend Turbulenzerzeugungsmittel zum Erzeugen einer Luftturbulenz im ersten oder/und zweiten Absaugkanalabschnitt (416, 418) zum Unterstützen der Bewegung von beim Befräsen erzeugten Spänen oder dergleichen in den ersten und den zweiten Absaugkanalabschnitt (444, 446, 448).

13. Fräseinrichtung nach einem der Ansprüche 1 - 12, ferner umfassend Umdrehungserfassungsmittel (460, 464; 472) zum Erfassen einer Drehung des Fräswerkzeugs (468), **dadurch gekennzeichnet, daß** die Umdrehungserfassungsmittel (460, 464; 472) zum direkten Erfassen der Drehung des Fräswerkzeugs (468) bezüglich des Werkzeugträgers ausgebildet sind.

14. Fräseinrichtung nach Anspruch 13,
**dadurch gekennzeichnet,**
**daß** die Umdrehungserfassungsmittel (460, 464; 472) ein Sensormittel (460) umfassen, welches vorzugsweise nahe einem Randbereich des Fräswerkzeugs (468) angeordnet ist, sowie ein an dem Fräswerkzeug (468) angeordnetes Erfassungsauslösungsmittel (464; 472), welches bei Vorbeibewegung an dem Sensormittel (460) die Ausgabe eines die Vorbeibewegung wiedergebenden Signals durch das Sensormittel (460) verursacht.

15. Fräseinrichtung nach Anspruch 14,
**dadurch gekennzeichnet,**
**daß** das Erfassungsauslösungsmittel (464; 472) durch wenigstens eine Stufe oder dgl. an einer Oberfläche (466) des Fräswerkzeugs (468) gebildet ist und daß das Sensormittel (460) zum Erfassen einer Abstandsänderung, insbesondere stufenartigen Abstandsänderung, zwischen der Oberfläche (466) des Fräswerkzeugs (468) und dem Sensormittel ausgebildet ist.

16. Fräseinrichtung nach Anspruch 15,
**dadurch gekennzeichnet,**
**daß** das Sensormittel (460) einen Näherungsschalter oder dergleichen umfaßt.

17. Fräseinrichtung nach Anspruch 15 oder 16,
**dadurch gekennzeichnet,**
**daß** die wenigstens eine Stufe (464; 472) an einer axialen Stirnfläche (466) des Fräswerkzeugs (468) ausgebildet ist und daß das Sensormittel (460) in axialem Abstand zur axialen Stirnfläche (466) angeordnet ist.

18. Fräseinrichtung nach Anspruch 15 oder 16,
**dadurch gekennzeichnet,**
**daß** die wenigstens eine Stufe an einer Radial-Außenumfangsfläche des Fräswerkzeugs (468) angeordnet ist und daß das Sensormittel (460') in radialem Abstand zu der Radial-Außenumfangsfläche angeordnet ist.

19. Fräseinrichtung nach Anspruch 18,
**dadurch gekennzeichnet,**
**daß** die wenigstens eine Stufe durch eine Außenverzahnung im Bereich der Radial-Außenumfangsfläche des Fräswerkzeugs (468) gebildet ist, über welche Außenverzahnung das Fräswerkzeug (468) zur Drehung um die Werkzeugdrehachse (A) antreibbar ist.

20. Fräseinrichtung nach einem der Ansprüche 1-19, **dadurch gekennzeichnet, daß** eine Gruppe von Fräskanten (141-1 - 141-4) im Bereich der mindestens einen Aufnahmepfanne (31,32;131,132) zum Befräsen des jeweiligen Schweißbereichs (14a,15a) vorgesehen ist, wobei weiter die Fräskanten (141-1 - 141-4) der Gruppe von Fräskanten (141-1 - 141-4) annähernd in die Werkzeugdrehachse (130,230) enthaltenden Ebenen angeordnet und über den Umfang der Aufnahmepfanne (131,132) verteilt sind, wobei weiter die Relativ-Stellung des Schweißbereichs (14a,15a) und der Aufnahmepfanne (31,32;131,132) durch Einstellmittel mindestens einer der Baugruppen: Elektrodenhalter (16) und Werkzeugträger (36) variabel ist und wobei Andrückmittel (148) vorgesehen sind, um für Fräsvorgänge den Schweißbereich (14a,15a) einer jeweiligen Elektrode (14,15) in Befräsungseingriff mit der Aufnahmepfanne (31,32;131,132) und der zugehörigen Gruppe von Fräskanten (141-1 - 141-4) zu halten, und
daß die Gruppe von Fräskanten (141-1 - 141-4) mindestens und vorzugsweise vier Fräskanten (141-1 - 141-4) umfaßt.

21. Fräseinrichtung nach Anspruch 20,
**dadurch gekennzeichnet,**
**daß** die Fräskanten (141-1 - 141-4) einer Gruppe von Fräskanten (141-1 - 141-4) an bezüglich der Werkzeugdrehachse (130,230) im wesentlichen radial verlaufenden Speichen (140-1 - 140-4) eines radförmigen Fräsers des Fräswerkzeugs (28) angeordnet sind.

22. Fräseinrichtung nach Anspruch 20 oder 21,
**dadurch gekennzeichnet,**
**daß** das mindestens eine Fräswerkzeug (28) mit zwei koaxialen und in Richtung der Werkzeugdrehachse (130,230) voneinander abgekehrten Aufnahmepfannen (131,132) ausgeführt ist.

23. Fräseinrichtung nach Anspruch 22,
**dadurch gekennzeichnet,**
**daß** jeder der Aufnahmepfannen (131,132) eine Gruppe von Fräskanten (141-1 - 141-4) zugeordnet ist.

24. Fräseinrichtung nach einem der Ansprüche 20 - 23,
**dadurch gekennzeichnet,**
**daß** ein mit den Fräskanten (141-1 - 141-4) ausgeführter Fräser des Fräswerkzeugs (28) als Fräseinsatz (129,229) zum lösbaren Einbau in einen Drehkopf (34) des Fräswerkzeugs (28) ausgebildet ist, wobei dieser Drehkopf (34) in dem Fräswerkzeugträger (36) drehbar gelagert ist.

25. Fräseinrichtung nach einem der Ansprüche 20 - 24,
**dadurch gekennzeichnet,**
**daß** der Fräswerkzeugträger (36) in einer Punkt-Schweiß-Anlage mindestens einer Punkt-Schweiß-Elektrode (14,15) oder mindestens einem Punkt-Schweiß-Elektrodenpaar (14,15) derart zugeordnet ist, daß die jeweils zu befräsende Punkt-Schweiß-Elektrode (14,15) durch Einstellung von elektrodenhalterseitigen Einstellmitteln (148) von einem Arbeitszustand in eine Befräsungsstellung gegenüber dem jeweiligen Fräswerkzeug (28) einstellbar ist.

26. Fräseinrichtung nach einem der Ansprüche 20 - 25,
**dadurch gekennzeichnet,**
**daß** die Punkt-Schweiß-Elektrode (14,15) einen stabförmigen Elektrodenschaft (18) mit einem an einem Ende des Elektrodenschafts (18) angeordneten Schweißbereich (14a,15a) umfaßt.

27. Fräseinrichtung nach einem der Ansprüche 20 - 26,
**dadurch gekennzeichnet,**
**daß** der Schweißbereich (14a,15a) eine annähernd sphärische oder annähernd kegelstumpfförmige Oberfläche mit einer Wirkfläche (26) und einer die Wirkfläche (26) wenigstens teilweise umgebenden Randzone (22) aufweist.

28. Fräseinrichtung nach einem der Ansprüche 20 - 27,
**dadurch gekennzeichnet,**
**daß** der Schweißbereich (14a,15a) eine im wesentlichen plane oder geringfügig konvex gewölbte Wirkfläche (26) besitzt.

29. Fräseinrichtung nach einem der Ansprüche 20 - 28,
**dadurch gekennzeichnet,**
**daß** die Fräskanten (141-1 - 141-4) der Gruppe von Fräskanten (141-1 - 141-4) an einem insbesondere durch Sinterung einstückig geformten Speichenkörper (139) angeordnet sind, dessen radial äußere Enden in einen Ringkörper (138) eingebaut, vorzugsweise eingelötet, sind.

30. Fräseinrichtung nach einem der Ansprüche 20 - 29,
**dadurch gekennzeichnet,**
**daß** zwei Fräskanten (141-1,141-3;141-2,141-4) einer Gruppe von Fräskanten (141-1. - 141-4) annähernd in einer gemeinsamen, die Werkzeugdrehachse (130,230) enthaltenden Ebene (142-1) angeordnet sind.

31. Fräseinrichtung nach Anspruch 30,
**dadurch gekennzeichnet,**
**daß** die in einer gemeinsamen, die Werkzeugdrehachse (130,230) enthaltenden Ebene (142-1) angeordneten Fräskanten (141-1,141-3) bei einer Betrachtungsrichtung orthogonal zu dieser gemeinsamen Ebene (142-1) eine er Aufnahmepfanne (131,132) entsprechende bzw. zur Bildung der Aufnahmepfanne (131,132) beitragende konkave Kontur besitzen.

32. Fräseinrichtung nach Anspruch 31,
**dadurch gekennzeichnet,**
**daß** die Fräskanten (141-1 - 141-4) mindestens eines Paars (141-1,141-3;141-2,141-4) von annähernd in einer gemeinsamen, die Werkzeugdrehachse (130) enthaltenden Ebene (142-1) liegenden Fräskanten (141-1 - 141-4) radial einwärts bis auf Null-Abstand an die Werkzeugdrehachse (130) heranreichen.

33. Fräseinrichtung nach Anspruch 32,
**dadurch gekennzeichnet,**
**daß** das Heranreichen einer Fräskante (141-1,141-3) bis auf nahezu Null-Abstand an die Werkzeugdrehachse (130) durch Abschrägung einer Speiche(140-2,140-4) ermöglicht ist, welche eine der betreffenden Fräskante (141-1,141-3) in Fräsdrehrichtung (143) vorauslaufende Fräskante (141-2,141-4) aufweist.

34. Fräseinrichtung nach Anspruch 32,
**dadurch gekennzeichnet,**
**daß** die Fräskanten (141-1 - 141-4) mindestens eines Paars (141-1,141-3;141-2,141-4) von in einer gemeinsamen, die Werkzeugdrehachse (230) enthaltenden Ebene liegenden Fräskanten (141-1 - 141-4) nach radial einwärts in eine von Fräskanten (141-1 - 141-4) im wesentlichen freie Zentralfläche (249) einlaufen.

35. Fräseinrichtung nach einem der Ansprüche 21 - 32,
**dadurch gekennzeichnet,**
**daß** die Fräskanten (141-1 - 141-4) an den Speichen (140-1 - 140-4) durch die Werkzeugdrehachse (130,230) enthaltende Speichenflächen (142-1) und durch entgegen der Fräsdrehrichtung (143) abfallende Dachflächen (144-1,145-1) der Speichen (140-1 - 140-4) gebildet sind.

36. Fräseinrichtung nach einem der Ansprüche 1 - 35,
**dadurch gekennzeichnet,**
**daß** an ein und demselben Werkzeugträger (36) mindestens zwei Fräswerkzeuge (129,229) angeordnet sind, welche zur Erfüllung unterschiedlicher Befräsungsaufgaben an dem Schweißbereich (14a,15a) ein und derselben Punkt-Schweiß-Elektrode (14,15) ausgebildet sind.

37. Fräseinrichtung nach Anspruch 36,
**dadurch gekennzeichnet,**
**daß** von den mindestens zwei an einem gemeinsamen Werkzeugträger (36) angeordneten Fräswerkzeugen (129,229) ein erstes (229) zum Befräsen einer Randzone (22) des Schweißbereichs (14a,15a) und ein zweites (129) zum gleichzeitigen Befräsen der Randzone (22) und einer Wirkfläche (26) des Schweißbereichs (14a,15a) ausgebildet ist.

38. Fräseinrichtung nach einem der Ansprüche 1 - 37, **dadurch gekennzeichnet, daß** das Fräswerkzeug (329) wenigstens eine in einer die Werkzeugdrehachse enthaltenen Ebene (142-1, 142-2, 142-3, 142-4) liegende und bezüglich der Werkzeugdrehachse radial verlaufende Fräskante (141-1, 141-2, 141-3, 141-4) zum Befräsen eines jeweiligen Schweißbereichs aufweist, wobei die Fräskante (141-1, 141-2, 141-3, 141-4) durch eine in einer Werkzeugdrehrichtung vorne liegende Vorderkante einer der wenigstens einen Fräskante (141-1, 141-2, 141-3, 141-4) zugeordneten Elektrodenanlagefläche (150-1a, 150-1b, 150-2a, 150-3a, 150-3b, 150-4a) des Fräswerkzeügs (329) gebildet ist, wobei eine Breite (w) der Elektrodenanlagefläche (150-1a, 150-2a, 150-3a, 150-4a) orthogonal zur Fräskante (141-1, 141-2, 141-3, 141-4) von radial innen nach radial außen, vorzugsweise konstant, abnimmt, gewünschtenfalls mit einem oder mehreren Merkmalen der vorangehenden Ansprüche.

39. Fräseinrichtung nach Anspruch 38,
**dadurch gekennzeichnet,**
**daß** die der wenigstens einen Fräskante (141-1, 141-2, 141-3, 141-4) zugeordnete Elektrodenanlagefläche (150-1a, 150-1b, 150-2a, 150-3a, 150-3b, 150-4a) bezüglich der die Werkzeugdrehachse enthaltenen Ebene (142-1, 142-2, 142-3, 142-4), in welcher die wenigstens eine Fräskante (141-1, 141-2, 141-3, 141-4) liegt, unter einem Winkel von näherungsweise 90° angeordnet ist.

40. Fräseinrichtung nach Anspruch 38 oder 39,
**dadurch gekennzeichnet,**
**daß** die wenigstens eine Fräskante (141-1, 141-2, 141-3, 141-4) einen radial äußeren Fräskantenabschnitt (141-1a, 141-2a, 141-3a, 141-4a) mit einer zugeordneten radial äußeren Elektrodenanlagefläche (150-1a, 150-2a, 150-3a, 150-4a) umfaßt, wobei ein radial innerer Endbereich des radial äußeren Fräskantenabschnitts (141-1a, 141-2a, 141-3a, 141-4a) und der zugeordneten radial äußeren Elektrodenanlagefläche (150-1a, 150-2a, 150-3a, 150-4a) einen radialen Abstand zur Werkzeugdrehachse aufweist, und daß der radial äußere Fräskantenabschnitt (150-1a, 150-2a, 150-3a, 150-4a) bezüglich der Werkzeugdrehachse geneigt ist zum Vorsehen einer im wesentlichen kegelstumpfartigen oder sphärischen Randzone einer Schweißelektrode.

41. Fräseinrichtung nach Anspruch 40,
**dadurch gekennzeichnet,**
**daß** die wenigstens eine Fräskante (141-1, 141-3) ferner einen an den radial äußeren Fräskantenabschnitt (141-1a, 141-3a) angrenzenden radial inneren Fräskantenabschnitt (141-1b, 141-3b) mit einer zugeordneten radial inneren Elektrodenanlagefläche (150-1b, 150-3b) umfaßt.

42. Fräseinrichtung nach Anspruch 41,
**dadurch gekennzeichnet,**
**daß** der radial innere Fräskantenabschnitt (150-1b, 150-3b) zur Werkzeugdrehachse näherungsweise orthogonal verläuft und gewünschtenfalls geringfügig konkav gekrümmt ist zum Vorsehen einer geringfügig konvex gekrümmten Wirkfläche einer Punkt-Schweiß-Elektrode.

43. Fräseinrichtung nach einem der Ansprüche 41 oder 42,
**dadurch gekennzeichnet,**
**daß** nur die dem radial äußeren Fräskantenabschnitt (141-1a, 141-2a, 141-3a, 141a-4a) zugeordnete radial äußere Elektrodenanlagefläche (150-1a, 150-2a, 150-3a, 150-4a) in ihrer Breite (w) nach radial außen abnimmt und daß die dem radial inneren Fräskantenabschnitt (141-1b, 141-3b) zugeordnete radial innere Elektrodenanlagefläche (150-1b, 150-3b) in radialer Richtung eine im wesentlichen konstante Breite aufweist.

44. Fräseinrichtung nach Anspruch 43,
**dadurch gekennzeichnet,**
**daß** die Breite der radial inneren Elektrodenanlagefläche (150-1b, 150-3b) kleiner ist als eine Breite der radial äußeren Elektrodenanlagefläche (150-1a, 150-3a) in ihrem radial inneren Endbereich.

45. Fräseinrichtung nach einem der Ansprüche 38 - 44,
**dadurch gekennzeichnet,**
**daß** das Fräswerkzeug (329) eine Mehrzahl von Fräskanten (141-1, 141-2, 141-3, 141-4) aufweist.

46. Fräseinrichlung nach Anspruch 45,
**dadurch gekennzeichnet,**
**daß** in Umfangsrichtung unmittelbar aufeinander folgende Fräskanten (141-1, 141-2, 141-3, 141-4) einen Winkelabstand im Bereich von 80° - 100°, vorzugsweise von 90°, zueinander aufweisen.

47. Fräseinrichtung nach Anspruch 45 oder 46,
**dadurch gekennzeichnet,**
**daß** das Fräswerkzeug (329) eine gerade Anzahl an Fräskanten (141-1, 141-2, 141-3, 141-4), vorzugsweise vier Fräskanten, aufweist, welche jeweils in die Werkzeugdrehachse enthaltenden Ebenen (142-1, 142-2, 142-3, 142-4) liegen.

48. Fräseinrichtung nach Anspruch 41 und Anspruch 47,
**dadurch gekennzeichnet,**
**daß** jeweils im wesentlichen diametral gegenüberliegende Fräskanten (141-1, 141-2, 141-3, 141-4) ein Fräskantenpaar bilden und daß die Fräskanten (141-1, 141-3) eines ersten Fräskantenpaares von in Umfangsrichtung nebeneinanderliegenden ersten und zweiten Fräskantenpaaren den radial inneren und den radial äußeren Fräskantenabschnitt (141-1a, 141-3a, 141-1b, 141-3b) mit den zugeordneten radial inneren und radial äußeren Elektrodenanlageflächen (150-1a, 150-3a, 150-1b, 150-3b) aufweisen, und daß die Fräskanten (141-2, 141-4) des zweiten Fräskantenpaars jeweils nur den radial äußeren Fräskantenabschnitt (141-2a, 141-4a) mit den jeweils zugeordneten radial äußeren Elektrodenanlageflächen (150-2a, 150-4a) aufweisen.

49. Fräseinrichtung nach einem des Ansprüche 1 - 48 **dadurch gekennzeichnet,**
**daß** die Fräseinrichtung in einer Punkt-Schweiß-Anlage mindestens einer Punkt-Schweiß-Elektrode oder mindestens einem Punkt-Schweiß-Elektrodenpaar derart zugeordnet ist, daß die jeweils zu befräsende Punkt-Schweiß-Elektrode bzw. -Elektroden durch Einstellung von elektrodenhalterseitigen Einstellmitteln von einem Arbeitszustand in eine Befräsungsstellung gegenüber dem jeweiligen Fräswerkzeug (329) einstellbar ist bzw. sind, wobei die elektrodenhalterseitigen Einstellmittel zum Vorsehen einer veränderbaren Anlagekraft der Punkt-Schweiß-Elektrode bzw. -Elektroden an der wenigstens einen Fräskante (141-1, 141-2, 141-3, 141-4) und der zugeordneten Elektrodenanlagefläche (150-1a, 150-1b, 150-2a, 150-3a, 150-3b, 150-4a) ausgebildet sind.

50. Fräseinrichtung nach Anspruch 49,
**dadurch gekennzeichnet,**
**daß** die elektrodenhalterseitigen Einstellmittel zum Erhöhen der Anlagekraft entsprechend einer in der Elektrodenlebensdauer zunehmenden Abfräsung der Punkt-Schweiß-Elektrode bzw. -Elektroden ausgebildet sind.

51. Fräseinrichtung nach Anspruch 50,
**dadurch gekennzeichnet,**
**daß** die elektrodenhalterseitigen Einstellmittel die Anlagekraft entsprechend der Anzahl an durchgeführten Fräsvorgängen erhöhen.

52. Verfahren zum Befräsen des Schweißbereichs von Punkt-Schweiß-Elektroden zum Zwecke der Korrektur von sich während einer Arbeitsperiode einer Schweißelektrode (14,15) einstellenden Veränderungen (24) des Schweißbereichs (14a,15a) unter Verwendung einer Fräseinrichtung nach einem der Ansprüche 1 - 51,
**dadurch gekennzeichnet,**
**daß** man mit unterschiedlichem Takt Befräsungsarbeiten an einer Randzone (22) und an einer Wirkfläche (26) des jeweiligen Schweißbereichs (14a,15a) vornimmt.

53. Verfahren nach Anspruch 52,
**dadurch gekennzeichnet,**
**daß** man Befräsungen der Randzone (22) nach einer geringeren Anzahl von Punkt-Schweißungen vornimmt als Befräsungen der Wirkfläche (26).

54. Verfahren nach Anspruch 52 und 53,
**dadurch gekennzeichnet,**
**daß** man in einer Folge von Befräsungsvorgängen jeweils in sämtlichen Befräsungsvorgängen die Randzone (22) befräßt und in nur einem Teil der Befräsungen sowohl die Randzone (22) als auch die Wirkfläche (26) befräßt.

55. Verfahren nach einem der Ansprüche 52 bis 54,
**dadurch gekennzeichnet,**
**daß** eine Anpreßkraft, mit welcher die Punkt-Schweiß-Elektrode bzw. -Elektroden gegen das Fräswerkzeug gepreßt werden, mit zunehmendem Elektrodenalter, vorzugsweise entsprechend einer Anzahl an durchgeführten Fräsvorgängen, erhöht wird.

56. Verfahren zum Befräsen des Schweißbereichs von Punkt-Schweiß-Elektroden unter Verwendung einer Fräseinrichtung nach einem der Ansprüche 1 - 51,
**dadurch gekennzeichnet,**
**daß** man zur Erstanpassung einer Schweißelektrode (14,15) an eine bestimmte Schweißaufgabe gegenüber einer Folge von Werkstücken unter Berücksichtigung der geometrischen Einstellung der Schweißelektrode (14,15) zum jeweiligen Werkstück die Befräsung des Schweißbereichs (14a,15a) wahlweise nur in einer Randzone (22) des Schweißbereichs (14a,15a) oder in einer Wirkfläche (26) des Schweißbereichs (14a,15a) oder - gegebenenfalls getrennt - sowohl in der Randzone (22) als auch der Wirkfläche (26) des Schweißbereichs (14a,15a) vornimmt.

## Claims

1. Milling device for milling the welding region of spot-welding electrodes held by an electrode holder, comprising a tool carrier (412) with at least one milling tool rotatably mounted therein about a tool axis of rotation (A) and rotary drive means for this milling tool, the milling tool preferably being constructed with at least one concave receptacle socket substantially concentric to the tool axis of rotation (A) for receiving the welding region of the respective spot-welding electrode, each with at least one milling edge in the region of this at least one receptacle socket for milling the respective welding region, **characterised by** suction filtering means (416, 418) for suction filtering swarf or the like generated during milling, the suction filtering means (416, 418) comprising: at least on one side of the milling tool in the direction of the tool axis of rotation (A), a sheet part (416, 418) with an electrode insertion aperture (428, 430) through which a spot-welding electrode can be advanced to the milling tool, and with a first suction filtering duct portion (444, 446) surrounding the electrode insertion aperture (428, 430) at least in certain regions and being connected to vacuum generating means.

2. Milling device according to claim 1, **characterised in that** the suction filtering means (416, 418) comprise a sheet part (416, 418) which can be arranged at least on one side of the tool carrier (412) opposed to the direction of the tool axis of rotation (A), with an electrode insertion aperture (428, 430) which can be brought into alignment by the at least one receptacle socket in the direction of the tool axis of rotation (A), a first suction filtering duct portion (444, 446) which surrounds the electrode insertion aperture (428, 430) at least in certain regions, and a second suction filtering duct portion (448) which connects the first suction filtering duct portion (444, 446) to a vacuum generating means connecting region (452) of the at least one sheet part (416).

3. Milling device according to claim 2, **characterised in that** the first and/or the second suction filtering duct portion (444, 446, 448) is/are open in the at least one sheet part (416, 418) to a surface (425, 426) of the at least one sheet part (416, 418) which can be brought into abutment with the tool carrier (412).

4. Milling device according to claim 2 or 3, **characterised in that** an electrode insertion duct (432, 434) extending from the electrode insertion aperture (428, 430) substantially transversely to the tool axis of rotation (A) is provided in the at least one sheet part (416, 418).

5. Milling device according to claim 4, **characterised in that** the electrode insertion duct (432, 434) connects the electrode insertion aperture (428, 430) to a side edge face of the at least one sheet part (416, 418) and preferably extends in the direction of the tool axis of rotation (A) through the entire sheet part (416, 418).

6. Milling device according to claim 4 or 5, **characterised in that** the electrode insertion duct (432, 434) is formed in at least one sheet part (416, 418) by electrode guide faces (436, 438, 440, 442) extending preferably in a funnel-shaped manner toward the electrode insertion aperture (428, 430).

7. Milling device according to any of claims 2 to 6, **characterised in that** two sheet parts (416, 418) are provided, wherein one respective sheet part (416, 418) can be arranged on each of the sides of the tool carrier (412) opposed in the direction of the tool axis of rotation (A).

8. Milling device according to claim 7, **characterised in that** a tool carrier receiving indentation (420) is provided in at least one (416) of the sheet parts (416, 418) on its side which can be brought into abutment with the tool carrier (412) in such a way that when the tool carrier (412) is connected to the sheet parts (416, 418) a recess is formed in the region of the mutually opposing sides of the sheet parts in which the tool carrier (412) is substantially completely received.

9. Milling device according to claim 8, **characterised in that** the sheet parts (416, 418) can be brought into abutment with one another, at least in certain regions, in an edge region (424) surrounding the receiving recess, preferably with insertion of sealing means.

10. Milling device according to any of claims 7 to 9, **characterised in that** the second suction filtering duct portions (448) of the two sheet parts (416, 418) are connected to one another in their end regions remote from the respective first suction filtering duct portions (444, 446) by a connecting duct portion (450) constructed in at least one (416) of the sheet parts (416, 418), and **in that** the connecting duct portion (450) connects the second suction filtering duct portions (448) in any sheet part (416, 418) to the vacuum generating means connecting region (452).

11. Milling device according to any of claims 1 to 10, also comprising vacuum generating means (454) which preferably comprise a vacuum pump (454).

12. Milling device according to claim 2 and optionally any of claims 3 to 11, further comprising turbulence generating means for generating atmospheric turbulence in the first and/or second suction filtering duct portion (416, 418) to assist the movement of swarf or the like generated during milling into the first and second suction filtering duct portion (444, 446, 448).

13. Milling device according to any of claims 1 to 12, further comprising rotation detection means (460, 464; 472) for detecting a rotation of the milling tool (468), **characterised in that** the rotation detecting means (460, 464; 472) are constructed for direct detection of the rotation of the milling tool (468) with respect to the tool carrier.

14. Milling device according to claim 13, **characterised in that** the rotation detection means (460, 464; 472) comprise a sensor (460) preferably arranged in the vicinity of an edge region of the milling tool (468), and a detection triggering means (464; 472) arranged on the milling tool (468) which during a movement past the sensor (460) causes outputting of a signal by the sensor (460) reproducing the passing movement.

15. Milling device according to claim 14, **characterised in that** the detection triggering means (464; 472) is formed by at least one step or the like on a surface (466) of the milling tool (468), and **in that** the sensor (460) is constructed to detect a change in spacing, in particular a step-like change in spacing, between the surface (466) of the milling tool (468) and the sensor.

16. Milling device according to claim 15, **characterised in that** the sensor (460) comprises a proximity switch or the like.

17. Milling device according to claim 15 or 16, **characterised in that** the at least one step (464; 472) is constructed on an axial end face (466) of the milling tool (468), and **in that** the sensor (460) is arranged at an axial spacing from the axial end face (466).

18. Milling device according to claim 15 or 16, **characterised in that** the at least one step is arranged on a radial outer circumferential face of the milling tool (468) and **in that** the sensor (460') is arranged at a radial spacing from the radial outer peripheral face.

19. Milling device according to claim 18, **characterised in that** the at least one step is formed by an outer toothing in the region of the radial outer peripheral face of the milling tool (468), via which outer toothing the milling tool (468) can be driven to rotate about the tool axis of rotation (A).

20. Milling device according to any of claims 1 to 19, **characterised in that** a group of milling edges (141-1 to 141-4) is provided in the region of the at least one receptacle socket (31, 32; 131, 132) for milling the respective welding region (14a, 15a), the milling edges (141-1 to 141-4) of the group of milling edges (141-1 to 141-4) also being arranged approximately in the planes containing the tool axis of rotation (130, 230) and being distributed over the circumference of the receptacle socket (131, 132), the relative position of the welding region (14a, 15a) and of the receptacle socket (31, 32; 131, 132) also being variable owing to adjusting means of at least one of the subassemblies: electrode holder (16) and tool carrier (36), and pressure means (148) being provided to hold the welding region (14a, 15a) of a respective electrode (14, 15) in milling engagement with the socket receptacle (31, 32; 131, 132) and the associated group of milling edges (141-1 to 141-4) during milling operations and **in that** the group of milling edges (141-1 to 141-4) comprises at least and preferably four milling edges (141-1 to 141-4).

21. Milling device according to claim 20, **characterised in that** the milling edges (141-1 to 141-4) of a group of milling edges (141-1 to 141-4) are arranged on spokes (140-1 to 140-4) of a wheel-like milling cutter of the milling tool (28) extending substantially radially with respect to the tool axis of rotation (130, 230).

22. Milling device according to claim 20 or 21, **characterised in that** the at least one milling tool (28) is constructed with two coaxial receptacle sockets (131, 132) facing away from one another in the direction of the tool axis of rotation (130, 230).

23. Milling device according to claim 22, **characterised in that** a group of milling edges (141-1 to 141-4) is associated with each of the receptacle sockets (131, 132).

24. Milling device according to any of claims 20 to 23, **characterised in that** a milling cutter of the milling tool (28) constructed with the milling edges (141-1 to 141-4) is designed as a milling insert (129, 229) for detachable installation in a rotary head (34) of the milling tool (28), this rotary head (34) being rotatably mounted in the milling tool carrier (36).

25. Milling device according to any of claims 20 to 24, **characterised in that** the milling tool carrier (36) in a spot-welding plant is associated with at least one spot-welding electrode (14, 15) or at least one spot-welding electrode pair (14, 15) in such a way that the respective spot-welding electrode (14, 15) to be milled can be adjusted by adjusting electrode holder-side adjusting means (148) from a working state into a milling position with respect to the respective milling tool (28).

26. Milling device according to any of claims 20 to 25, **characterised in that** the spot-welding electrode (14, 15) comprises a rod-like electrode adapter (18) with a welding region (14a, 15a) arranged on one end of the electrode adapter (18).

27. Milling device according to any of claims 20 to 26, **characterised in that** the welding region (14a, 15a) has an approximately spherical or approximately truncated cone-shaped surface with an effective face (26) and an edge zone (22) at least partially surrounding the effective face (26).

28. Milling device according to any of claims 20 to 27, **characterised in that** the welding region (14a, 15a) has a substantially plane or slightly convex effective face (26).

29. Milling device according to any of claims 20 to 28, **characterised in that** the milling edges (141-1 to 141-4) of the group of milling edges (141-1 to 141-4) are arranged on a spoked body (139) formed integrally, in particular by sintering, the radially outer ends of which are installed, preferably soldered, in an annular body (138).

30. Milling device according to any of claims 20 to 29, **characterised in that** two milling edges (141-1, 141-3; 141-2, 141-4) of a group of milling edges (141-1 to 141-4) are arranged in a common plane (142-1) containing the tool axis of rotation (130, 230).

31. Milling device according to claim 30, **characterised in that** the milling edges (141-1, 141-3) arranged in a common plane (142-1) containing the tool axis of rotation (130, 230) have a concave contour corresponding to the receptacle socket (131, 132) or contributing to the formation of the receptacle socket (131, 132), viewed in a direction orthogonal to this common plane (142-1).

32. Milling device according to claim 31, **characterised in that** the milling edges (141-1 to 141-4) of at least one pair (141-1, 141-3; 141-2, 141-4) of milling edges (141-1 to 141-4) located in a common plane (142-1) containing the tool axis of rotation (130) extend radially inwards to the tool axis of rotation (130) up to zero spacing.

33. Milling device according to claim 32, **characterised in that** the extension of a milling edge (141-1, 141-3) to the tool axis of rotation (130) up to virtually zero spacing is made possible by bevelling a spoke (140-2, 140-4) which has a milling edge (141-2, 141-4) running in advance of the relevant milling edge (141-1, 141-3) in the milling direction of rotation (143).

34. Milling device according to claim 32, **characterised in that** the milling edges (141-1 to 141-4) of at least one pair (141-1, 141-3; 141-2, 141-4) of milling edges (141-1 to 141-4) located in a common plane containing the tool axis of rotation (230) run radially inwards into a central face (249) substantially free of milling edges (141-1 to 141-4).

35. Milling device according to any of claims 21 to 32, **characterised in that** the milling edges (141-1 to 141-4) on the spokes (140-1 to 140-4) are formed by the spoke faces (142-1) containing the tool axis of rotation (130, 230) and by roof faces (144-1, 145-1) of the spokes (140-1 to 140-4) sloping counter to the milling direction of rotation (143).

36. Milling device according to any of claims 1 to 35, **characterised in that** at least two milling tools (129, 229) are arranged on one and the same tool carrier (36) and are constructed to fulfil various milling tasks on the welding region (14a, 15a) of one and the same spot-welding electrode (14, 15).

37. Milling device according to claim 36, **characterised in that** of the at least two milling tools (129, 229) arranged on a common tool carrier (36), a first milling tool (229) is constructed for milling an edge zone (22) of the welding region (14a, 15a) and a second milling tool (129) is constructed for simultaneous milling of the edge zone (22) and an effective face (26) of the welding region (14a, 15a).

38. Milling device according to any of claims 1 to 37, **characterised in that** the milling tool (329) has at least one milling edge (141-1, 141-2, 141-3, 141-4) located in a plane (142-1, 142-2, 142-3, 142-4) containing the tool axis of rotation and extending radially with respect to the tool axis of rotation for milling one respective welding region, the milling edge (141-1, 141-2, 141-3, 141-4) being formed by a leading edge, located at the front in a tool direction of rotation, of an electrode abutment face (150-1a, 150-2a, 150-3a, 150-4a) of the milling tool (329) associated with the at least one milling edge (141-1, 141-2, 141-3, 141-4), a width (w) of the electrode abutment face (150-1a, 150-2a, 140-3a, 150-4a) decreasing orthogonally to the milling edge (141-1, 141-2, 141-3, 141-4) from radially inwards to radially outwards, preferably constantly, and if desired with one or more features of the preceding claims.

39. Milling device according to claim 38, **characterised in that** the electrode abutment face (150-1a, 150-1b, 150-2a, 150-3a, 150-3b, 150-4a) associated with the at least one milling edge (141-1, 141-2, 141-3, 141-4) is arranged at an angle of approximately 90° with respect to the plane (142-1, 142-2, 142-3, 142-4) containing the tool axis of rotation and in which the at least one milling edge (141-1, 141-2, 141-3, 141-4) is located.

40. Milling device according to claim 38 or 39, **characterised in that** the at least one milling edge (141-1, 141-2, 141-3, 141-4) comprises a radially outer milling edge portion (141-1a, 141-2a, 141-3a, 141-4a) with an associated radially outer electrode abutment face (150-1a, 150-2a, 150-3a, 150-4a), a radially inner end region of the radially outer milling edge portion (141-1a, 141-2a, 141-3a, 141-4a) and the associated radially outer electrode abutment face (150-1a, 150-2a, 150-3a, 150-4a) having a radial spacing from the tool axis of rotation, and **in that** the radially outer milling edge portion (150-1a, 150-2a, 150-3a, 150-4a) is inclined with respect to the tool axis of rotation to provide a substantially truncated cone-like or spherical edge zone of a welding electrode.

41. Milling device according to claim 40, **characterised in that** the at least one milling edge (141-1, 141-3) also comprises a radially inner milling edge portion (141-1b, 141-3b) adjoining the radially outer milling edge portion (141-1a, 141-3a) with an associated radially inner electrode abutment face (150-1b, 150-3b).

42. Milling device according to claim 41, **characterised in that** the radially inner milling edge portion (150-1b, 150-3b) extends approximately orthogonally to the tool axis of rotation and, if desired, is slightly concave to provide a slightly convex effective face of a spot-welding electrode.

43. Milling device according to either of claims 41 or 42, **characterised in that** only the radially outer electrode abutment face (150-1a, 150-2a, 150-3a, 150-4a) associated with the radially outer milling edge portion (141-1a, 141-2a, 141-3a, 141-4a) decreases in its width (w) radially outwardly, and **in that** the radially inner electrode abutment face (150-1b, 150-3b) associated with the radially inner milling edge portion (141-1b, 141-3b) has a substantially constant width in the radial direction.

44. Milling device according to claim 43, **characterised in that** the width of the radially inner electrode abutment face (150-1b, 150-3b) is smaller than a width of the radially outer electrode abutment face (150-1a, 150-3a) in its radially inner end region.

45. Milling device according to any of claims 38 to 44, **characterised in that** the milling tool (329) has a plurality of milling edges (141-1, 141-2, 141-3, 141-4).

46. Milling device according to claim 45, **characterised in that** immediately successive milling edges (141-1, 141-2, 141-3, 141-4) in the circumferential direction have an angular spacing in the range of 80° to 100°, preferably of 90°, from one another.

47. Milling device according to claim 45 or 46, **characterised in that** the milling tool (329) has an even number of milling edges (141-1, 141-2, 141-3, 141-4), preferably four milling edges, which are each located in the planes (142-1, 142-2, 142-3, 142-4) containing the tool axis of rotation.

48. Milling device according to claim 41 and claim 47, **characterised in that** respective substantially diametrically opposed milling edges (141-1, 141-2, 141-3, 141-4) form a milling edge pair, and **in that** the milling edges (141-1, 141-3) of a first milling edge pair of first and second milling edge pairs located side by side in the circumferential direction have the radially inner and the radially outer milling edge portion (141-1a, 141-3a, 141-1b, 141-3b) with the associated radially inner and radially outer electrode abutment faces (150-1a, 150-3a, 150-1b, 150-3b) and **in that** the milling edges (141-2, 141-4) of the second milling edge pair each have only the radially outer milling edge portion (141-2a, 141-4a) with the respective associated radially outer electrode abutment faces (150-2a, 150-4a).

49. Milling device according to any of claims 1 to 48, **characterised in that** the milling device in a spot-welding plant is associated with at least one spot-welding electrode or at least one spot-welding electrode pair in such a way that the spot-welding electrode or electrodes to be milled in each case can be adjusted by adjusting electrode holder-side adjusting means from an operating state into a milling position with respect to the respective milling tool (329), the electrode holder-side adjusting means being constructed for provision of a changeable contact force of the spot-welding electrode or electrodes on the at least one milling edge (141-1, 141-2, 141-3, 141-4) and the associated electrode abutment face (150-1a, 150-1b, 150-2a, 150-3a, 150-3b, 150-4a).

50. Milling device according to claim 49, **characterised in that** the electrode holder-side adjusting means are constructed to increase the contact force in accordance with milling off of the spot-welding electrode or electrodes increasing over the life of the electrodes.

51. Milling device according to claim 50, **characterised in that** electrode holder-side adjusting means increase the contact force in accordance with the number of milling operations carried out.

52. Method for milling the welding region of spot-welding electrodes for the purpose of correcting changes (24) in the welding region (14a, 15a) occurring during an operating period of a welding electrode (14, 15) by using a milling device according to any of claims (1 to 51), **characterised in that** milling operations are undertaken on an edge zone (22) and on an effective face (26) of the respective welding region (14a, 15a) with different clocking.

53. Method according to claim (52), **characterised in that** milling of the edge zone (22) is undertaken after a small number of spot-weldings as milling of the effective face (26).

54. Method according to claim 52 and 53, **characterised in that** the edge zone (22) is milled in a sequence of milling operations in all respective milling operations and both the edge zone (22) and the effective face (26) are milled in only a portion of the milling operations.

55. Method according to any of claims 52 to 54, **characterised in that** a pressure force with which the spot-welding electrode or electrodes is/are pressed against the milling tool is increased with increasing electrode holder, preferably in accordance with a number of milling operations carried out.

56. Method for milling the welding region of spot-welding electrodes by using a milling device according to any of claims 1 to 51, **characterised in that** to initially adapt a welding electrode (14, 15) to a specific welding task with respect to a series of work pieces while taking into account the geometric setting of the welding electrodes (14, 15) to the respective work piece, milling of the welding region (14a, 15a) is optionally undertaken only in one edge zone (22) of the welding region (14a, 15a) or in one effective face (26) of the welding region (14a, 15a) or - optionally separately - both in the edge zone (22) and the effective face (26) of the welding region (14a, 15a).

## Revendications

1. Dispositif de fraisage pour fraiser la zone de soudage d'électrodes de soudage par points maintenues par un porte-électrode, comprenant un porte-outil (412) avec au moins un outil de fraisage monté tournant à l'intérieur de celui-ci autour d'un axe de rotation (A) de l'outil, et des moyens d'entraînement en rotation pour cet outil de fraisage, l'outil de fraisage étant réalisé avec au moins une cavité de réception concave, sensiblement concentrique à l'axe de rotation (A) de l'outil, pour recevoir la zone de soudage de l'électrode de soudage par points respective avec au moins une arête de fraisage respective dans la zone de cette ou de ces cavités de réception pour fraiser la zone de soudage respective,
**caractérisé par**
des moyens d'aspiration (416, 418) pour aspirer les copeaux ou similaires produits pendant le fraisage, les moyens d'aspiration (416, 418) comprenant : au moins sur un côté de l'outil de fraisage, dans la direction de l'axe de rotation (A) de l'outil, une partie en plaque (416, 418) avec une ouverture d'introduction (428, 430) de l'électrode, à travers laquelle une électrode de soudage par points peut être approchée de l'outil de fraisage, et avec un premier tronçon de canal d'aspiration (444, 446) entourant au moins en partie l'ouverture d'introduction (428, 430) de l'électrode, et en liaison avec des moyens de génération de dépression.

2. Dispositif de fraisage selon la revendication 1,
**caractérisé**
**en ce que** les moyens d'aspiration (416, 418) comprennent une partie en plaque (416, 418) qui peut être disposée au moins sur l'un des côtés du porte-outils (412) opposés dans la direction de l'axe de rotation (A) de l'outil, avec une ouverture d'introduction (428, 430) de l'électrode qui peut être orientée avec la ou les cavités de réception dans la direction de l'axe de rotation (A) de l'outil, un premier tronçon de canal d'aspiration (444, 446) qui entoure au moins en partie l'ouverture d'introduction (428, 430) de l'électrode, et un deuxième tronçon de canal d'aspiration (448) qui relie le premier tronçon de canal d'aspiration (444, 446) à une zone de raccordement (452) avec les moyens de production de dépression d'au moins une partie en plaque (416).

3. Dispositif de fraisage selon la revendication 2,
**caractérisé**
**en ce que** le premier et/ou le deuxième tronçon de canal d'aspiration (444, 446, 448) dans la ou les parties en plaque (416, 418) sont ouverts vers une surface (425, 426), qui peut être amenée en contact avec le porte-outils (412), de la ou des parties en plaque (416, 418).

4. Dispositif de fraisage selon la revendication 2 ou 3,
**caractérisé**
**en ce que** dans la ou les parties en plaque (416, 418) est prévu un canal d'introduction (432, 434) de l'électrode s'étendant, depuis l'ouverture d'introduction (428, 4301 de l'électrode, sensiblement transversalement à l'axe de rotation (A) de l'outil.

5. Dispositif de fraisage selon la revendication 4,
**caractérisé**
**en ce que** le canal d'introduction (432, 434) de l'électrode relie l'ouverture d'introduction (428, 430) de l'électrode à une surface des bords latéraux de la ou des parties en plaque (416, 418), et s'étend de préférence dans la direction de l'axe de rotation (A) de l'outil à travers toute la partie en plaque (416, 418).

6. Dispositif de fraisage selon la revendication 4 ou 5,
**caractérisé**
**en ce que** le canal d'introduction (432, 434) de l'électrode est formé dans la ou les parties en plaque (416, 418) par des surfaces de guidage d'électrode (436, 438, 440, 442) s'étendant de préférence en forme de cône vers l'ouverture d'introductlon (428, 430) de l'électrode.

7. Dispositif de fraisage selon l'une des revendications 2 à 6,
**caractérisé**
**en ce que** deux parties en plaque (416, 418) sont prévues, chaque partie en plaque (416, 418) pouvant étre disposée sur chacun des côtés du porte-outil (412) opposés dans la direction de l'axe de rotation (A) de l'outil.

8. Dispositif de fraisage selon la revendication 7,
**caractérisé**
**en ce que** dans au moins une (416) des parties en plaque (416, 418), sur son côté pouvant étre amené en contact avec le porte-outil (412), est prévu un renfoncement de réception (420) du porte-outil tel que lorsque l'on relie le porte-outil (412) aux parties en plaque (416, 418), il est formé, dans la zone des faces tournées l'une vers l'autre des parties en plaque, un évidement dans lequel le porte-outil (412) est reçu sensiblement entièrement.

9. Dispositif de fraisage selon la revendication 8,
**caractérisé**
**en ce que** les parties en plaque (416, 418) peuvent être amenées, au moins par endroits, en contact l'une avec l'autre dans une zone des bords (424) entourant l'évidement de réception, de préférence par interposition de moyens d'étanchéité.

10. Dispositif de fraisage selon l'une des revendications 7 à 9,
**caractérisé**
**en ce que** les deuxièmes tronçons de canal d'aspiration (448) des deux parties en plaque (416, 418) sont reliés entre eux dans leurs zones terminales éloignées des premiers tronçons de canal d'aspiration (444, 446) respectifs, par un tronçon de canal de liaison (450) réalisé dans au moins une (416) des parties en plaque (416, 418), et en ce que le tronçon de canal de liaison (450) relie les deuxièmes tronçons de canal d'aspiration (448) dans chaque partie en plaque (416, 418) à la zone de raccordement (452) pour les moyens de génération de dépression.

11. Dispositif de fraisage selon l'une des revendications 1 à 10, comportant en outre des moyens de génération de dépression (454) qui comprennent de préférence une pompe à vide (454).

12. Dispositif de fraisage selon la revendication 2 et si on le souhaite l'une des revendications 3 à 11, comprenant en outre des moyens de génération de turbulence pour produire une turbulence d'air dans le premier ou/et le deuxième tronçon de canal d'aspiration (416, 418), pour favoriser le mouvement de copeaux ou similaires produits pendant le fraisage, dans le premier et le deuxième tronçon de canal d'aspiration (444, 446, 448).

13. Dispositif de fraisage selon l'une des revendications 1 à 12, comprenant en outre des moyens de détection de rotation (460, 464 ; 472) pour détecter une rotation de l'outil de fraisage (468), **caractérisé en ce que** les moyens de détection de rotation (460, 464 ; 472) sont conçus pour détecter directement la rotation de l'outil de fraisage (468) par rapport au porte-outil.

14. Dispositif de fraisage selon la revendication 13,
**caractérisé**
**en ce que** les moyens de détection de rotation (460, 464; 472) comprennent un moyen à capteur (460) qui est disposé de préférence à proximité d'une zone des bords de l'outil de fraisage (468), ainsi qu'un moyen de déclenchement de détection (464 ; 472) disposé sur l'outil de fraisage (468) qui provoque, lors du passage devant le moyen à capteur (460), l'émission d'un signal traduisant ce passage, par le moyen à capteur (460).

15. Dispositif de fraisage selon la revendication 14,
**caractérisé**
**en ce que** le moyen de déclenchement de détection (464; 472) est formé par au moins un gradin ou similaire sur une surface (466) de l'outil de fraisage (468), et en ce que le moyen à capteur (460) est conçu pour détecter un changement de distance, en particulier un changement de distance de type gradin, entre la surface (466) de l'outil de fraisage (468) et le moyen à capteur.

16. Dispositif de fraisage selon la revendication 15,
**caractérisé**
**en ce que** le moyen à capteur (460) comprend un interrupteur de proximité ou similaire.

17. Dispositif de fraisage selon la revendication 15 ou 16,
**caractérisé**
**en ce que** le ou les gradins (464; 472) sont réalisés sur une face d'extrémité axiale (466) de l'outil de fraisage (468) et en ce que le moyen à capteur (460) est disposé à distance axiale de la face d'extrémité axiale (466).

18. Dispositif de fraisage selon la revendication 15 ou 16,
**caractérisé**
**en ce que** le ou les gradins sont disposés sur une surface périphérique radiale de l'outil de fraisage (468) et en ce que le moyen à capteur (460') est disposé à distance radiale de la surface périphérique extérieure radiale,

19. Dispositif de fraisage selon la revendication 18,
**caractérisé**
**en ce que** le ou les gradins sont formés par une denture extérieure, dans la zone de la surface périphérique extérieure radiale de l'outil de fraisage (468), l'outil de fraisage (468) étant entraîné en rotation autour de l'axe de rotation (A) de l'outil par cette denture extérieure.

20. Dispositif de fraisage selon l'une des revendications 1 à 19,
**caractérisé**
**en ce qu'**un groupe d'arêtes de fraisage (141-1 - 141-4) est prévu dans la zone de la ou des cavités de réception (31, 32; 131, 132) pour fraiser la zone de soudage (14a, 15a) respective, les arêtes de fraisage (141-1 - 141-4) du groupe d'arêtes de fraisage (141-1 - 141-4) étant disposées en outre approximativement dans des plans contenant l'axe de rotation (130, 230) de l'outil, et étant réparties sur la périphérie de la cavité de réception (131, 132), les positions relatives de la zone de soudage (14a, 15a) et de la cavité de réception (31, 32; 131, 132) étant en outre variables par des moyens de réglage d'au moins l'un des ensembles : ports-électrode (16) et porte-outil (36), et des moyens de pression (148) étant prévus pour maintenir, pour les opérations de fraisage, la zone de soudage (14a, 15a) d'une électrode (14, 15) respective en engagement de fraisage avec la cavité de réception (31, 32 ; 131, 132) et avec le groupe correspondant d'arêtes de fraisage (141-1 - 141-4), et le groupe d'arêtes de fraisage (141-1 - 141-4) comprenant au moins et de préférence quatre arêtes de fraisage (141-1 - 141-4).

21. Dispositif de fraisage selon la revendication 20,
**caractérisé**
**en ce que** les arêtes de fraisage (141-1 - 141-4) d'un groupe d'arêtes de fraisage (141-1 - 141-4) sont disposées sur des rayons (140-1 - 140-4) s'étendant sensiblement radialement par rapport à l'axe de rotation (130, 230) de l'outil, d'une fraise en forme de roue de l'outil de fraisage (28).

22. Dispositif de fraisage selon la revendication 20 ou 21,
**caractérisé**
**en ce que** le ou les outils de fraisage (28) comportent deux cavités de réception (131, 132) coaxiales et tournées à l'opposé l'une de l'autre dans la direction de l'axe de rotation (130-230) de l'outil.

23. Dispositif de fraisage selon la revendication 22,
**caractérisé**
**en ce qu'**un groupe d'arêtes de fraisage (141-1 - 141-4) est associé à chacune des cavrtés de réception (131, 132).

24. Dispositif de fraisage selon l'une des revendications 20 à 23,
**caractérisé**
**en ce qu'**une fraise de l'outil de fraisage (28), réalisée avec les arêtes de fraisage (141-1 - 141-4), est conçue en tant qu'insert de fraisage (129, 229) pour être montée de manière séparable dans une tête tournante (34) de l'outil de fraisage (28), cette tête tournante (34) étant montée de manière à pouvoir tourner dans le porte-outil de fraisage (36).

25. Dispositif de fraisage selon l'une des revendications 20 à 24,
**caractérisé**
**en ce que** le ports-outil de fraisage (36) est disposé dans une installation de soudage par points avec au moins une électrode de soudage par points ( 14, 15) ou au moins une paire d'électrodes de soudage par points (14, 15), en ce que l'électrode de soudage par points (14, 15) à souder dans chaque cas peut être réglée par rapport à l'outil de fraisage (28) respectif, par réglage de moyens de réglage (148) côté porte-électrode, d'un état de travail à une position de fraisage.

26. Dispositif de fraisage selon l'une des revendications 20 à 25,
**caractérisé**
**en ce que** l'électrode de soudage par points (14, 15) comprend une tige d'électrode (18) en forme de barreau avec une zone de soudage (14a, 15a) disposée à une extrémité de la tige d'électrode (18).

27. Dispositif de fraisage selon l'une des revendications 20 à 26,
**caractérisé**
**en ce que** la zone de soudage (14a, 15a) présente une surface approximativement sphérique ou approximativement tronconique avec une face active (26) et une zone de bordure (22) entourant au moins en partie la face active (26).

28. Dispositif de fraisage selon l'une des revendications 20 à 27,
**caractérisé**
**en ce que** la zone de soudage (14a, 15a) possède une face active (26) sensiblement plane ou tegèrement convexe.

29. Dispositif de fraisage selon l'une des revendications 20 à 28,
**caractérisé**
**en ce que** les arêtes de fraisage (141-1 - 141-4) du groupe d'arêtes de fraisage (141-1 - 141-4) sont disposées sur un corps de rayon (139) formé d'une seule pièce en particulier par frittage dont les extrémités radialement extérieures sont montées dans un corps annulaire (138), de préférence brasé.

30. Dispositif de fraisage selon l'une des revendications 20 à 29
**caractérisé**
**en ce que** deux arêtes de fraisage (141-1, 141-3 ; 141-2, 141-4) d'un groupe d'arêtes de fraisage (141-1 - 141-4) sont disposées approximativement dans un plan (142-1) commun contenant l'axe de rotation (130, 230) de l'outil.

31. Dispositif de fraisage selon la revendication 30,
**caractérisé**
**en ce que** les arêtes de fraisage (141-1, 141-3) disposées dans un plan (142-1) commun contenant l'axe de rotation (130, 230) de l'outil, présentent, vues dans un sens d'observation orthogonal à ce plan commun (142-1), un contour concave correspondant à l'une des cavités de réception (131, 132) ou contribuant à former la cavité de réception (131, 132).

32. Dispositif de fraisage selon la revendication 31,
**caractérisé**
**en ce que** les arêtes de fraisage (141-1 - 141-4) d'au moins une paire (141-1, 141-3 ; 141-2, 141-4) d'arêtes de fraisage (141-1 - 141-4) situées approximativement dans un plan (142-1) commun contenant l'axe de rotation (130) de l'outil, s'étendent radialement vers l'intérieur jusqu'à une distance zéro de l'axe de rotation (130) de l'outil.

33. Dispositif de fraisage selon la revendication 32,
**caractérisé**
**en ce que** l'approche d'une arête de fraisage (141-1, 141-3) jusqu'à une distance pratiquement nulle de l'axe de rotation (130) de l'outil, est rendue possible par chanfreinement d'un rayon (140-2, 140-4) qui comporte une arête de fraisage (141-2, 141-4) précédant l'arête de fraisage (141-1, 141-3) concernée dans le sens de rotation de fraisage (143).

34. Dispositif de fraisage selon la revendication 32,
**caractérisé**
**en ce que** les arêtes de fraisage (141-1 - 141-4) d'au moins une paire (141-1, 141-3 ; 141-2, 147-4) d'arêtes de fraisage (147-1 - 141-4) situées dans un plan commun contenant l'axe de rotation (230) de l'outil, pénètrent radialement vers l'intérieur, dans une surface centrale (249) sensiblement sans aréte de fraisage (141-1 - 141-4).

35. Dispositif de fraisage selon l'une des revendications 21 à 32,
**caractérisé**
**en ce que** les arêtes de fraisage (141-1 - 141-4) sur les rayons (140-1 - 140-4) sont formées par des surfaces de rayon (141-1) contenant l'axe de rotation (130, 230) de l'outil et par des surfaces en toit (144-1, 145-1), descendant dans le sens contraire au sens de rotation de fraisage (143), des rayons (140-1 - 140-4).

36. Dispositif de fraisage selon l'une des revendications 1 à 35,
**caractérisé**
**en ce que** sur un même porte-outil (36) sont disposés au moins deux outils de fraisage (129, 229) qui sont concus pour exécuter différentes tâches de fraisage sur la zone de soudage (14a, 15a) d'une seule et même électrode de soudage par points (14, 15).

37. Dispositif de fraisage selon la revendication 6,
**caractérisé**
**en ce que** sur au moins deux outils de fraisage (129, 228) disposés sur un porte-outil (36) commun, un premier outil de fraisage (229) est conçu pour fraiser une zone de bordure (22) de la zone de soudage (14a, 15a), et un deuxième outil de fraisage (129) est concu pour fraiser simultanément la zone de bordure (22) et une face active (26) de la zone de soudage (14a, 15a).

38. Dispositif de fraisage selon l'une des revendications 1 à 37,
**caractérisé**
**en ce que** l'outil de fraisage (329) comporte au moins une aréte de fraisage (141-1, 141-2, 141-3, 141-4) située dans un plan (142-1, 142-2, 142-3, 142-4) contenant l'axe de rotation de l'outil et s'étendant radialement par rapport à l'axe de protation de l'outil, pour fraiser une zone de soudage respective, l'arête de fraisage (141-1, 141-2, 141-3, 141-4) étant formée par une arête avant située à l'avant dans un sens de rotation de l'outil, d'une surface de contact d'électrode (150-1a, 150-1b, 150-2a, 150-3a, 150-3b, 150-4a) associée à au moins une arête de fraisage (141-1, 141-2, 141-3, 141-4); de l'outil de fraisage (329), une largeur (w) de la surface de contact d'électrode (150-1a, 150-2a, 150-3a, 150-4a) diminuant, de préférence de manière constante, orthogonalement à l'arête de fraisage (141-1, 141-2 141-3, 141-4) du côté radial intérieur vers le côté radial extérieur, si on le souhaite avec une ou plusieurs caractéristiques des revendications précédentes.

39. Dispositif de fraisage selon la revendication 38,
**caractérisé**
**en ce que** la surface de contact d'électrode (151-1a, 150-1b, 150-2a, 150-3a, 150-3b, 150-4a) associée à la ou aux arêtes de fraisage (141-1, 141-2, 141-3, 141-4), est disposée suivant un angle approximativement de 90° par rapport au plan (142-1, 142-2, 142-3, 142-4) contenant l'axe de rotation de l'outil, dans lequel se situe la ou les arêtes de fraisage (141-1, 141-2, 141-3, 141-4).

40. Dispositif de fraisage selon la revendication 38 ou 39,
**caractérisé**
**en ce que** la ou les arêtes de fraisage (141-1, 141-2, 141-3, 141-4) comprennent une portion d'arête de fraisage (141-1a, 141-2a, 141-3a, 141-4a) radialement extérieure avec une surface de contact d'électrode (150-1a, 150-2a, 150-3a, 150-4a) radialement extérieure associée, une zone terminale radialement intérieure de la portion d'arête de fraisage (141-1a, 141-2a, 141-3a, 141-4a) radialement extérieure et de la surface de contact d'électrode (150-1a, 150-2a, 150-3a, 150-4a) radialement extérieure associée présentant une distance radiale par rapport à l'axe de rotation de l'outil, et en ce que la portion d'arête de fraisage (150-1a, 150-2a, 150-3a, 150-4a) radialement extérieure est inclinée par rapport à l'axe de rotation de l'outil pour prévoir une zone de bordure sensiblement tronconique ou sphérique d'une électrode de soudage.

41. Dispositif de fraisage selon la revendication 40,
**caractérisé**
**en ce que** la ou les arétes de fraisage (141-1, 141-3) comprennent en outre une portion d'arête de fraisage (141-1b, 141-3b) radiatement intérieure adjacente à la portion d'arête de fraisage (141-1a, 141-3a) radialement extérieure, avec une surface de contact d'électrode (150-1b, 150-3b) radialement intérieure associée.

42. Dispositif de fraisage selon la revendication 41,
**caractérisé**
**en ce que** la portion d'arête de fraisage (150-1b, 150-3b) radialement intérieure s'étend approximativement orthogonalement à l'axe de rotation de l'outil et, si on le souhaite, est légèrement concave pour prévoir une face active légèrement convexe d'une électrode de soudage par points.

43. Dispositif de fraisage selon l'une des revendications 41 ou 42,
**caractérisé**
**en ce que** seule la surface de contact d'électrode (150-1a, 150-2a, 150-3a, 150-4a) radialement extérieure, associée à la portion d'arête de fraisage (141-1a, 141-2a, 141-3a, 141-4a) radialement extérieure, diminue dans sa largeur (w) radialement vers l'extérieur et en ce que la surface de contact d'électrode (150-1b, 150-3b) radialement intérieure associée à la portion d'arête de fraisage (141-1b, 141-3b) radialement intérieure, présente une largeur sensiblement constante dans la direction radiale.

44. Dispositif de fraisage selon la revendication 43,
**caractérisé**
**en ce que** la largeur de la surface de contact d'électrode (150-1b, 150-3b) radialement intérieure est inférieure à une largeur de la surface de contact d'électrode (150-1a, 150-3a) radialement extérieure dans sa zone terminale radialement intérieure.

45. Dispositif de fraisage selon l'une des revendications 38 à 44,
**caractérisé**
**en ce que** l'outil de fraisage (329) comporte une pluralité d'arêtes de fraisage (141-1, 141-2, 141-3, 141-4).

46. Dispositif de fraisage selon la revendication 45,
**caractérisé**
**en ce que** des arêtes de fraisage (141-1, 141-2, 141-3, 141-4) se succédant directement dans la direction périphérique, présentent une distance angulaire réciproque comprise entre 80° et 100°, de préférence de 90°.

47. Dispositif de fraisage selon la revendication 45 ou 46,
**caractérisé**
**en ce que** l'outil de fraisage (329) comporte un nombre pair d'arêtes de fraisage (141-1, 141-2, 141-3, 141-4), de préférence quatre arêtes de fraisage, qui se situent chacune dans des plans (142-1, 142-2, 142-3, 142-4) contenant l'axe de rotation de l'outil.

48. Dispositif de fraisage selon la revendication 41 et la revendication 47,
**caractérisé**
**en ce que** des arêtes de fraisage (141-1, 141-2, 141-3, 141-4) sensiblement diamétralement opposées forment une paire d'arêtes de fraisage et en ce que les arêtes de fraisage (141-1, 141-3) d'une première paire d'arêtes de fraisage de premières et de deuxièmes paires d'arêtes de fraisage juxtaposées dans la direction périphérique, comportent la portion d'arête de fraisage radialement intérieure et la portion d'arête de fraisage radialement extérieure (141-1a, 141-3a, 141-1b, 141-3b) avec les surfaces de contact d'électrode radialement intérieures et radialement extérieures (150-1a, 150-3a, 150-1b, 150-3b) et en ce que les arêtes de fraisage (141-2, 141-4) de la deuxième paire d'arêtes de fraisage ne comportent que la portion d'arête de fraisage radialement extérieure (141-2a, 141-4a) avec les surfaces de contact d'électrode radialement extérieures (150-2a, 150-4a) respectives associées.

49. Dispositif de fraisage selon l'une des revendications 1 à 48,
**caractérisé**
**en ce que** le dispositif de fraisage dans une installation de soudage par points est associé à au moins une électrode de soudage par points ou au moins une paire d'électrodes de soudage par points, de manière que l'électrode de soudage par points ou les électrodes de soudage par points à souder soit ou soient régfable(s) par rapport à l'outil de fraisage (329) respectif, par réglage de moyens de réglage (côté porte-électrode) d'un état de travail à une position de fraisage, les moyens de réglage côté porte-électrode étant conçus pour prévoir une force de contact variable de l'électrode ou des électrodes de soudage par points sur la ou les arêtes de fraisage (141-1, 141-2, 141-3, 141-4) et la surface de contact d'électrode (150-1a, 150-1b, 150-2a, 150-3a, 150-3b, 150-4a) associée.

50. Dispositif de fraisage selon la revendication 49,
**caractérisé**
**en ce que** les moyens de réglage côté porte-électrode sont conçus pour accroître la force de contact conformément à un fraisage, augmentant dans la durée de vie de l'électrode, de l'électrode ou des électrodes de soudage par points.

51. Dispositif de fraisage selon la revendication 50,
**caractérisé**
**en ce que** les moyens de réglage côté porte-électrode augmentent la force de contact conformément au nombre d'opérations de fraisage exécutées.

52. Procédé de fraisage de la zone de soudage d'électrodes de soudage par points en vue de corriger des modifications (24) de la zone de soudage (14a, 15a), se produisant pendant une période de travail d'une électrode de soudage, par utilisation d'un dispositif de fraisage selon l'une des revendications 1 à 51,
**caractérisé**
**en ce que** l'on procède, à une cadence différente, à des opérations de fraisage sur une zone de bordure (22) et sur une face active (26) de la zone de soudage (14a, 15a) respective.

53. Procédé selon la revendication 52,
**caractérisé**
**en ce que** l'on procède à des fraisages de la zone de bordure (22) après un nombre réduit de soudures par points en tant que fraisages de la face active (26).

54. Procédé selon les revendications 52 et 53,
**caractérisé**
**en ce que** dans une succession d'opérations de fraisage on fraise la zone de bordure (22) dans toutes les opérations de fraisage, et on fraise la zone de bordure (22) ainsi que la face active (26) uniquement dans une partie des fraisages.

55. Procédé selon l'une des revendications 52 à 54,
**caractérisé**
**en ce qu'**on augmente une force de pression, par laquelle l'électrode ou les électrodes de soudage par points sont pressées contre l'outil de fraisage, au fur et à mesure qu'augmente l'âge des électrodes, de préférence conformément à un nombre d'opérations de fraisage exécutées.

56. Procédé de fraisage de la zone de soudage d'électrodes de soudage par points par utilisation d'un dispositif de fraisage selon l'une des revendications 1 à 57.
**caractérisé**
**en ce que** lors de la première adaptation d'une électrode de soudage (14, 15) à une tâche de soudage déterminée, par rapport à une succession de pièces, en tenant compte du réglage géométrique de l'électrode de soudage (14, 15) par rapport à la pièce respective, on procède au fraisage de la zone de soudage (14a, 15a) au choix, uniquement dans une zone de bordure (22) de la zone de soudage (14a, 15a) ou dans une face active (26) de la zone de soudage (14a, 15a) ou - éventuellement séparément - dans la zone de bordure (22) comme dans la face active (26) de la zone de soudage (14a, 15a).
